# EUROPEAN PATENT SPECIFICATION

(11) **EP 4 265 001 B1**
(45) Date of publication and mention of the grant of the patent: **26.08.2026**
(21) Application number: 21840678.3
(22) Date of filing: 16.12.2021
(51) Int. Cl.: H04W 36/00, H04W 36/14, H04W 88/06, H04W 8/18, H04W 76/28, H04W 52/02, H04W 68/00, H04W 76/27

(54) **MOBILITY PROCEDURE FOR MULTI-SIM**
MOBILITÄTSVERFAHREN FÜR MULTI-SIM
PROCÉDURE DE MOBILITÉ POUR MULTI-SIM

(30) Priority: 16.12.2020 US 202063126128 P
(43) Date of publication of application: 25.10.2023
(73) Proprietor: Telefonaktiebolaget LM Ericsson (publ), 164 83 Stockholm (SE)
(72) Inventor: DA SILVA, Icaro Leonardo, 170 77 Solna (SE); TERZANI, Alessio, 120 67 Stockholm (SE); ARAUJO, Lian, 171 71 Solna (SE)
(74) Representative: Ericsson
(86) International application number: PCT/IB2021/061845
(87) International publication number: WO 2022/130273

(56) References cited:
- EP-A1- 2 910 040
- "3rd Generation Partnership Project; Technical Specification Group Services and System Aspects; Study on system enablers for devices having multiple Universal Subscriber Identity Modules (USIM) (Release 17)", 30 November 2020 (2020-11-30), XP051963804, Retrieved from the Internet <URL:https://ftp.3gpp.org/tsg_sa/TSG_SA/TSGs_90E_Electronic/Docs/SP-200968.zip 23761-120.zip 23761-120.docx> [retrieved on 20201130]
- FUTUREWEI: "RAN2 impacts of multi-SIM UE notifications on network switching", vol. RAN WG2, no. electronic; 20201101, 23 October 2020 (2020-10-23), XP051943279, Retrieved from the Internet <URL:https://ftp.3gpp.org/tsg_ran/WG2_RL2/TSGR2_112-e/Docs/R2-2010620.zip R2-2010620 RAN2 impacts of multi-SIM UE notifications on network switching.docx> [retrieved on 20201023]

## Description

### TECHNICAL FIELD

Particular embodiments relate to wireless communication, and more specifically to a mobility procedure for a multi-SIM user equipment (UE).

### BACKGROUND

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

Some wireless devices may operate with more than one subscriber identify module (SIM). This may be referred to as multi-SIM operation. Operating with multiple SIMs may present several challenges. The network operations described below provide background information for understanding these challenges.

A user equipment (UE) is either in RRC_CONNECTED state or in RRC_INACTIVE state when a radio resource control (RRC) connection has been established. If this is not the case, i.e., no RRC connection is established, the UE is in RRC_IDLE state. The RRC states can further be characterized as follows.

For RRC_IDLE, a UE specific discontinuous reception (DRX) may be configured by upper layers. UE controlled mobility is based on network configuration. The UE monitors short messages transmitted with paging radio network temporary identifier (P-RNTI) over downlink control information (DCI), monitors a paging channel for core network (CN) paging using fifth generation (5G) S-temporary mobile subscriber identity (5G-S-TMSI), performs neighboring cell measurements and cell (re-)selection, acquires system information (SI) and can send SI request (if configured), and performs logging of available measurements together with location and time for logged measurement configured UEs.

For RRC _INACTIVE, a UE specific DRX may be configured by upper layers or by the RRC layer. UE controlled mobility is based on network configuration. The UE stores the UE inactive access stratum (AS) context. A radio access network (RAN)-based notification area is configured by RRC layer. The UE monitors short messages transmitted with P-RNTI over DCI, monitors a paging channel for CN paging using 5G-S-TMSI and radio access network (RAN) paging using full-RNTI, performs neighboring cell measurements and cell (re-)selection, performs RAN-based notification area updates periodically and when moving outside the configured RAN-based notification area; acquires system information and can send SI request (if configured), and performs logging of available measurements together with location and time for logged measurement configured UEs.

For RRC_CONNECTED, the UE stores the AS context. Unicast data is transferred to/from the UE. At lower layers, the UE may be configured with a UE specific DRX. UEs supporting carrier aggregation (CA) may use one or more SCells, aggregated with the SpCell, for increased bandwidth. UEs supporting dual connectivity (DC) use one secondary cell group (SCG), aggregated with the master cell group (MCG), for increased bandwidth. Network controlled mobility is within NR and to/from E-UTRA. The UE monitors short messages transmitted with P-RNTI over DCI if configured, monitors control channels associated with the shared data channel to determine if data is scheduled for it, provides channel quality and feedback information, performs neighboring cell measurements and measurement reporting, acquires system information, and performs immediate minimization of drive test (MDT) measurement together with available location reporting.

FIGURE 1 illustrates an overview of UE RRC state machine and state transitions in NR. A UE has only one RRC state in NR at any one time.

FIGURE 2 illustrates an overview of UE state machine and state transitions in NR as well as the mobility procedures supported between NR/5GC E-UTRA/EPC and E-UTRA/5GC.

The network includes DRX and paging in RRC_IDLE and RRC_INACTIVE. Paging allows the network to reach UEs in RRC_IDLE and in RRC_INACTIVE state through *Paging* messages, and to notify UEs in RRC _IDLE, RRC_INACTIVE and RRC _CONNECTED state of system information change and ETWS/CMAS indications through short messages. Both paging messages and short messages are addressed with P-RNTI on physical downlink control channel (PDCCH), but while the former is sent on paging control channel (PCCH), the latter is sent over PDCCH directly.

While in RRC_IDLE, the UE monitors the paging channels for CN-initiated paging. In RRC_INACTIVE the UE also monitors paging channels for RAN-initiated paging. A UE need not monitor paging channels continuously though. Paging DRX is defined where the UE in RRC_IDLE or RRC_INACTIVE is only required to monitor paging channels during one paging occasion (PO) per DRX cycle (see details in TS 38.304). The paging DRX cycles are configured by the network.

For CN-initiated paging, a default cycle is broadcast in system information, and a UE specific cycle can be configured via non-access stratum (NAS) signalling. For RAN-initiated paging, a UE-specific cycle is configured via RRC signalling.

The UE uses the shortest of the DRX cycles applicable, i.e., a UE in RRC_IDLE uses the shortest of the first two cycles above, while a UE in RRC_INACTIVE uses the shortest of the three.

The POs of a UE for CN-initiated and RAN-initiated paging are based on the same UE ID, resulting in overlapping POs for both. The number of different POs in a DRX cycle is configurable via system information and a network may distribute UEs to those POs based on their IDs.

In general, DRX is characterized by the following parameters. The *on-duration* is the duration that the UE waits for, after waking up, to receive PDCCHs. If the UE successfully decodes a PDCCH, the UE stays awake and starts the inactivity timer.

The *inactivity-timer* is the duration that the UE waits to successfully decode a PDCCH, from the last successful decoding of a PDCCH, failing which it can go back to sleep. The UE shall restart the inactivity timer following a single successful decoding of a PDCCH for a first transmission only (i.e., not for retransmissions).

The *retransmission-timer* is the duration until a retransmission can be expected.

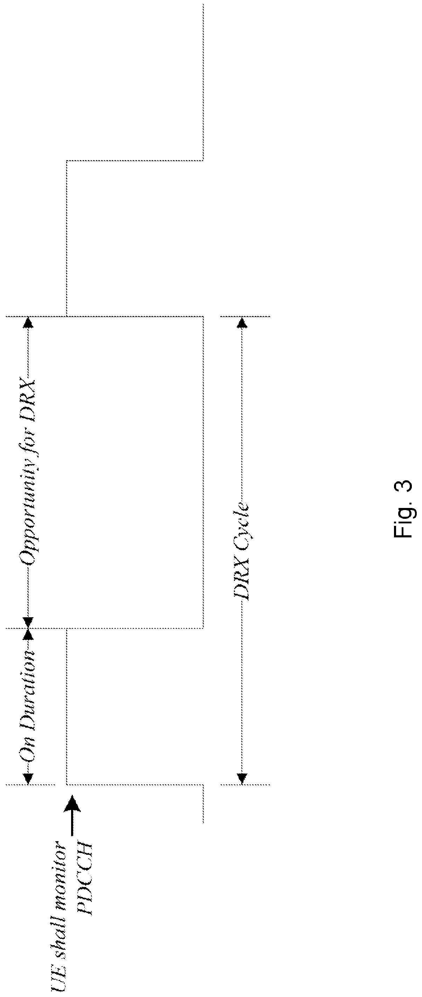

The *cycle* specifies the periodic repetition of the on-duration followed by a possible period of inactivity (see FIGURE 3 below).

The *active-time* is the total duration that the UE monitors PDCCH. This includes the "on-duration" of the DRX cycle, the time UE is performing continuous reception while the inactivity timer has not expired, and the time when the UE is performing continuous reception while waiting for a retransmission opportunity. An example is illustrated in FIGURE 3.

FIGURE 3 is a timing diagram illustrating a DRX cycle. As illustrated, the DRX cycle includes an onDuration followed by an opportunity for DRX. The UE monitors for PDCCH during the onDuration.

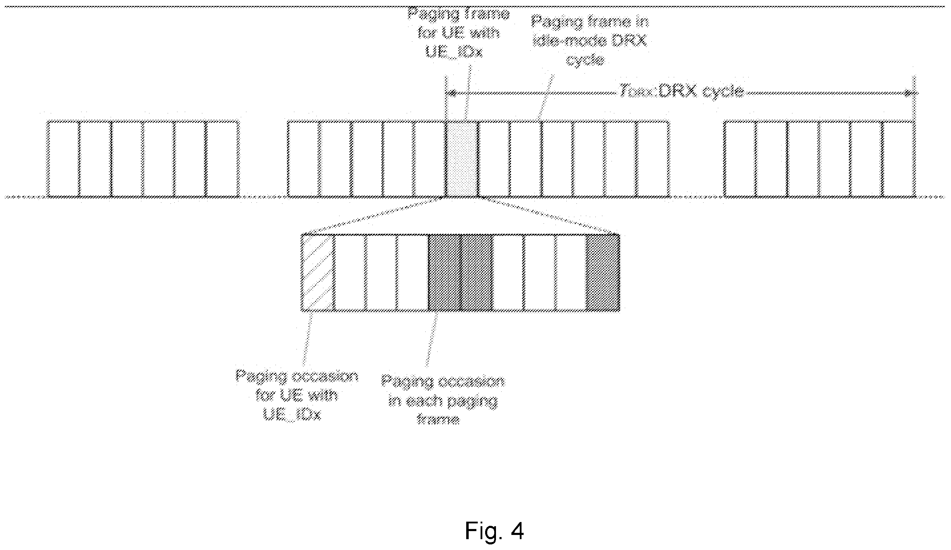

The UE may use DRX in RRC_IDLE and RRC_INACTIVE state to reduce power consumption. The UE monitors one paging occasion (PO) per DRX cycle. A PO is a set of PDCCH monitoring occasions and can consist of multiple time slots (e.g., subframe or orthogonal frequency division multiplexing (OFDM) symbol) where paging DCI can be sent. One paging frame (PF) is one radio frame and may contain one or multiple PO(s) or starting point of a PO. In multi-beam operations, the UE assumes that the same paging message and the same short message are repeated in all transmitted beams and thus the selection of the beam(s) for the reception of the paging message and short message is up to UE implementation. The paging message is the same for both RAN initiated paging and CN initiated paging. An example is illustrated in FIGURE 4.

FIGURE 4 is a timing diagram illustrating paging occasions in a radio frame. The PF and PO for paging are determined by the following formulae. The system frame number (SFN) for the PF is determined by (SFN + PF_offset) mod T = (T div N)*(UE_ID mod N). Index (i_s), indicating the index of the PO is determined by i_s = floor (UE_ID/N) mod Ns.

A PO associated with a PF may start in the PF or after the PF. The PDCCH monitoring occasions for a PO can span multiple radio frames. When *SearchSpaceId* other than 0 is configured for *paging-SearchSpace* the PDCCH monitoring occasions for a PO can span multiple periods of the paging search space.

The following parameters are used for the calculation of PF and i_s above:
T: DRX cycle of the UE (T is determined by the shortest of the UE specific DRX value(s), if configured by RRC and/or upper layers, and a default DRX value broadcast in system information. In RRC_IDLE state, if UE specific DRX is not configured by upper layers, the default value is applied).
N: number of total paging frames in T
Ns: number of paging occasions for a PF
PF_offset: offset used for PF determination
UE _ID: 5G-S-TMSI mod 1024

Parameters *Ns, nAndPagingFrameOffset, nrofPDCCH-MonitoringOccasionPerSSB-InPO,* and the length of default DRX Cycle are signaled in *SIB1.* The values of N and PF_offset are derived from the parameter *nAndPagingFrameOffset.* The parameter *first-PDCCH-MonitoringOccasionOfPO* is signaled in *SIB1* for paging in initial downlink (DL) bandwidth part (BWP). For paging in a DL BWP other than the initial DL BWP, the parameter *first-PDCCH-MonitoringOccasionOfPO* is signaled in the corresponding BWP configuration.

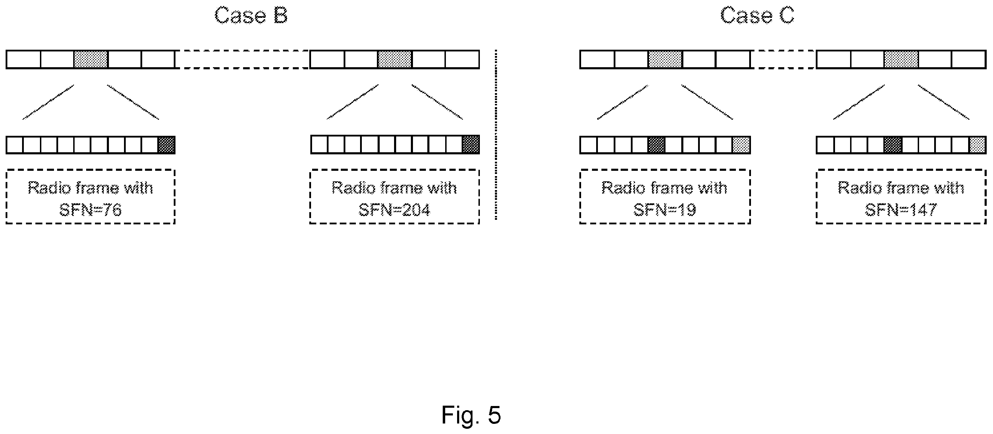

For example, in case B of FIGURE 5, one out of every 4 radio frames is used for paging, using one subframe in each of the radio frames. In case C of FIGURE 5, two subframes in each radio frame are used for paging, i.e. Ns = 2. All the shaded subframes can be used for paging; the darker ones are applicable for the UE with the indicated identity.

A UE may perform a mobility procedure in RRC_CONNECTED. Inter-cell mobility for RRC_CONNECTED UEs is summarized in TS 38.300. The intra-NR RAN handover performs the preparation and execution phase of the handover procedure performed without involvement of the 5GC, i.e. preparation messages are directly exchanged between the gNBs. The release of the resources at the source gNB during the handover completion phase is triggered by the target gNB.

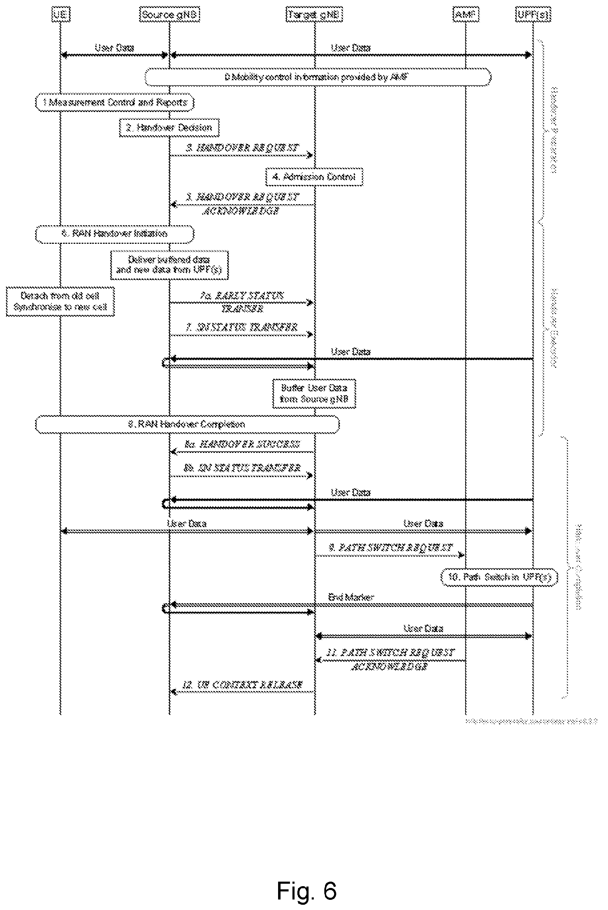

FIGURE 6 is a flow diagram illustrating the basic handover scenario where neither the access and mobility management function (AMF) nor the user plane function (UPF) changes. At step 0, the UE context within the source gNB contains information regarding roaming and access restrictions that were provided either at connection establishment or at the last timing advance (TA) update.

At step 1, the source gNB configures the UE measurement procedures and the UE reports according to the measurement configuration. At step 2, the source gNB decides to handover the UE, based on *MeasurementReport* and RRM information.

At step 3, the source gNB issues a Handover Request message to the target gNB passing a transparent RRC container with necessary information to prepare the handover at the target side. The information includes at least the target cell ID, KgNB*, the cell radio network temporary identifier (C-RNTI) of the UE in the source gNB, RRM-configuration including UE inactive time, basic AS-configuration including antenna information and downlink carrier frequency, the current QoS flow to data radio bearer (DRB) mapping rules applied to the UE, the SIB1 from source gNB, the UE capabilities for different radio access technologies (RATs), protocol data unit (PDU) session related information, and can include the UE reported measurement information including beam-related information if available. The PDU session related information includes the slice information and QoS flow level QoS profile(s). The source gNB may also request a dual active protocol stack (DAPS) handover for some DRBs.

After issuing a Handover Request, the source gNB should not reconfigure the UE, including performing Reflective QoS flow to DRB mapping.

At step 4, admission control may be performed by the target gNB. Slice-aware admission control shall be performed if the slice information is sent to the target gNB. If the PDU sessions are associated with non-supported slices, the target gNB shall reject such PDU sessions.

At step 5, the target gNB prepares the handover with L1/L2 and sends the HANDOVER REQUEST ACKNOWLEDGE to the source gNB, which includes a transparent container to be sent to the UE as an RRC message to perform the handover. The target gNB also indicates if a DAPS handover is accepted.

After the source gNB receives the HANDOVER REQUEST ACKNOWLEDGE, or as after the transmission of the handover command is initiated in the downlink, data forwarding may be initiated.

For DRBs configured with DAPS, downlink packet data convergence protocol (PDCP) service data units (SDUs) are forwarded with sequence number (SN) assigned by the source gNB, until SN assignment is handed over to the target gNB in step 8b, for which the normal data forwarding follows as defined in 9.2.3.2.3.

At step 6, the source gNB triggers the Uu handover by sending an *RRCReconfiguration* message to the UE containing the information required to access the target cell, which includes at least the target cell ID, the new C-RNTI, and the target gNB security algorithm identifiers for the selected security algorithms. It may also include a set of dedicated random access channel (RACH) resources, the association between RACH resources and SSB(s), the association between RACH resources and UE-specific CSI-RS configuration(s), common RACH resources, and system information of the target cell, etc.

For DRBs configured with DAPS, the source gNB does not stop transmitting downlink packets until it receives the HANDOVER SUCCESS message from the target gNB in step 8a. Conditional handover (CHO) cannot be configured simultaneously with DAPS HO.

At step 7a, for DRBs configured with DAPS, the source gNB sends the EARLY STATUS TRANSFER message. The DL COUNT value conveyed in the EARLY STATUS TRANSFER message indicates PDCP SN and hyper frame number (HFN) of the first PDCP SDU that the source gNB forwards to the target gNB. The source gNB does not stop assigning SNs to downlink PDCP SDUs until it sends the SN STATUS TRANSFER message to the target gNB in step 8b.

At step 7, for DRBs not configured with DAPS, the source gNB sends the SN STATUS TRANSFER message to the target gNB to convey the uplink PDCP SN receiver status and the downlink PDCP SN transmitter status of DRBs for which PDCP status preservation applies (i.e., for radio link control (RLC) acknowledge mode (AM)). The uplink PDCP SN receiver status includes at least the PDCP SN of the first missing uplink PDCP SDU and may include a bit map of the receive status of the out of sequence uplink PDCP SDUs that the UE needs to retransmit in the target cell, if any. The downlink PDCP SN transmitter status indicates the next PDCP SN that the target gNB shall assign to new PDCP SDUs not having a PDCP SN yet.

For DAPS handover, the uplink PDCP SN receiver status and the downlink PDCP SN transmitter status for a DRB with RLC-AM and not configured with DAPS may be transferred by the SN STATUS TRANSFER message in step 8b instead of step 7.

For DRBs configured with DAPS, the source gNB may additionally send the EARLY STATUS TRANSFER message(s) between step 7 and step 8b, to inform discarding of already forwarded PDCP SDUs. The target gNB does not transmit forwarded downlink PDCP SDUs to the UE whose COUNT is less than the conveyed DL COUNT value and discards them if transmission has not been attempted already.

At step 8, the UE synchronises to the target cell and completes the RRC handover procedure by sending *RRCReconfigurationComplete* message to target gNB. In case of DAPS handover, the UE does not detach from the source cell upon receiving the *RRCReconfiguration* message. The UE releases the source SRB resources, security configuration of the source cell and stops downlink/uplink reception/transmission with the source upon receiving an explicit release from the target node.

From RAN point of view, the DAPS handover is considered to only be completed after the UE has released the source cell as explicitly requested from the target node. RRC suspend, a subsequent handover or inter-RAT handover cannot be initiated until the source cell has been released.

At steps 8a/b, for DAPS handover, the target gNB sends the HANDOVER SUCCESS message to the source gNB to inform that the UE has successfully accessed the target cell. In return, the source gNB sends the SN STATUS TRANSFER message for DRBs configured with DAPS for which the description in step 7 applies, and the normal data forwarding follows as defined in 9.2.3.2.3.

The uplink PDCP SN receiver status and the downlink PDCP SN transmitter status are also conveyed for DRBs with RLC-UM in the SN STATUS TRANSFER message in step 8b, if configured with DAPS.

For DRBs configured with DAPS for which duplication avoidance is required (i.e., RLC-AM), the source gNB does not stop delivering uplink QoS flows to the UPF until it sends the SN STATUS TRANSFER message in step 8b. The target gNB does not forward QoS flows of the uplink PDCP SDUs successfully received in-sequence to the UPF until it receives the SN STATUS TRANSFER message, in which uplink HFN and the first missing SN in the uplink PDCP SN receiver status indicates the start of uplink PDCP SDUs to be delivered to the UPF. The target gNB does not deliver any uplink PDCP SDUs that have an UL COUNT lower than the provided.

The source gNB may omit sending the SN STATUS TRANSFER message if none of the DRBs are configured with DAPS or shall be treated with PDCP status preservation.

At step 9, the target gNB sends a PATH SWITCH REQUEST message to AMF to trigger 5GC to switch the downlink data path towards the target gNB and to establish an NG-C interface instance towards the target gNB.

At step 10, the 5GC switches the downlink data path towards the target gNB. The UPF sends one or more "end marker" packets on the old path to the source gNB per PDU session/tunnel and then can release any U-plane/TNL resources towards the source gNB.

At step 11, the AMF confirms the PATH SWITCH REQUEST message with the PATH SWITCH REQUEST ACKNOWLEDGE message.

At step 12, upon reception of the PATH SWITCH REQUEST ACKNOWLEDGE message from the AMF, the target gNB sends the UE CONTEXT RELEASE to inform the source gNB about the success of the handover. The source gNB can then release radio and C-plane related resources associated to the UE context. Any ongoing data forwarding may continue.

Further details about these steps, procedures and messages can be found in TS 38.423, wherein the HANDOVER REQUEST and HANDOVER REQUEST ACK are defined. The RRC container is defined in the inter-node messages in TS 38.331 (e.g., HandoverInformationPreparation).

Third Generation Partnership Project (3GPP) is currently studying how to best support UEs that can manage two or more simultaneous subscriptions (also referred to as Multi-SIM). A single UE is capable of having two or more subscription credentials and basically to "act" as two UE's within one device/hardware entity. Even though mobile terminals with that property exist, most operations are not optimized because there is no specific standardized support for multi-SIM to make it easier for UEs to manage two or more subscriptions simultaneously.

Several aspects may be addressed. For example, a UE may need to be provided support to easier switch between states related to utilization of subscription 1 (USIM1, connecting to a PLMN1) and states related to utilization or communication using subscription 2 (USIM2, connecting to PLMN2) because such states may be dependent, e.g., CM-Connected in PLMN1 and PLMN2. Such switching may be straightforward, or may not even be necessary, if the UE has the capability of communicating simultaneously towards two networks, using USIM1 and 2 simultaneously. For this to work, there may be a need for at least dual receiver and transmitter chains, frequencies that are used towards both networks do not cause interference to each other, and radio separation is good enough to not cause, e.g., IM effects in the device. Yet other aspects that can be addressed by standard is to introduce a signaling that enables a UE that cannot simultaneously communicate with, e.g., two or more networks, to at least signal a network that it is leaving, or becoming unreachable for that network.

A common scenario is a UE in RRC CONNECTED in Network A that needs to perform operations in Network B, e.g., listen to paging, SIB acquisition, and/or cell reselection. Such scenario may be further divided into short absence (e.g., when the UE listens to paging in network B and switches back to Network A), and long absence (e.g., when the UE initiates a service in network B and thus may not shortly switch back to Network A).

A short UE absence may be handled by negotiation of short interruptions to the connection of the UE to Network A while it performs operations in Network B. During this absence of the UE in Network A, it is usually expected that the UE will be kept in RRC CONNECTED in Network A. Eventually Network A may decide to move the UE to RRC IDLE or RRC INACTIVE as a result of the negotiation.

A short UE absence may be handled by a UE indication that it is leaving for a short time. The UE may use the release preference indication from UE power saving mechanism to indicate leaving (e.g., if it would expect to be moved to IDLE it could send such indication to Network A).

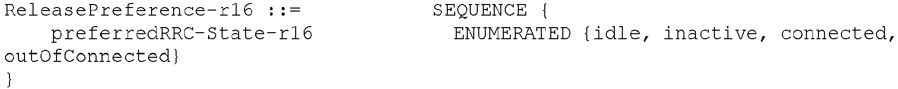

A Long UE absence may be handled by a UE indication that it is leaving for a long period. Network A may still keep the UE context until a certain timer expires.

There currently exist certain challenges. For example, multi-SIM devices have become more and more popular in different countries. A user may have both a personal and a business subscription in one device or have two personal subscriptions in one device for different services (e.g., use one individual subscription and one "family circle" plan). However, support for multi-SIM within a device is currently handled in an implementation-specific manner without any support from 3GPP specifications, resulting in a variety of implementations and UE behaviors that are most of the time sub-optimal.

UEs that are registered to more than one network (e.g., public land mobile networks (PLMNs)) need to be able to receive paging messages from more than one network. Dependent on UE capabilities (e.g., Rx and Tx capabilities) this can create situations in which a UE is occupied listening to pages from one network while pages from other networks also may be sent. Further, UEs may be actively communicating with one network while another network pages the UE. If a user switches between communications towards different networks, situations may occur when a UE/user can no longer receive data from a network it was recently communicating in. Such situations can have a negative impact on performance, e.g., if pages are sent and not properly received, or if users are scheduled while not being able to receive communication.

Particular problems exist when a multi-SIM UE with a single Rx processing unit/chain or when all Rx processing units/chains are configured to be used in one of the networks/PLMN can only receive transmissions from one PLMN at a time. If the UE is in RRC_CONNECTED in a first PLMN (e.g., PLMN1 associated to USIM1) and in RRC_IDLE (or RRC_INACTIVE) in PLMN2 (e.g., associated to USIM2), such a UE would thus need to be able to maintain being reachable by any of the two PLMNs (or two USIMs), i.e., need to be able to perform actions in RRC_CONNECTED (e.g., PDCCH monitoring, measurements according to MeasConfig, channel state information (CSI) measurements and reporting, etc.) in PLMN1 while performing IDLE/INACTIVE actions in PLMN2 such as listen for paging in PLMN2, perform cell reselection measurements, associated measurements and evaluations, acquire system information (e.g., upon cell reselection or modification indications), perform registration area updates (e.g., upon entering a new registration area), or RAN area updates (e.g., if in RRC_INACTIVE in PLMN2 and performs cell reselection to an area not in the Configured RAN Area Configuration).

In the situations when a UE in fact is communicating using, e.g., USIM1 towards PLMN1, it is in CM_CONNECTED and RRC_CONNECTED, there is clear way how a UE is able to maintain the operations listed above, in PLMN2, associated to connectivity using subscription on USIM2. 3GPP is currently discussing how a multi-SIM UE, i.e., having SIM cards from a PLMN-A and PLMN-B, can be in RRC_CONNECTED in PLMN-A while in RRC_IDLE and/or RRC_INACTIVE in PLMN-B, wherein the UE should be able to perform RRC_IDLE/RRC_INACTIVE procedures in PLMN-B such as paging monitoring, cell reselection, etc.

Some proposals include a UE capable of operating with multiple USIMs (at least two) that performs the following actions. If the UE is in CONNECTED in a first PLMN (associated with the first USIM) and in IDLE/INACTIVE in a second PLMN (associated with the second USIM), the UE determines a periodic pattern for performing a set of IDLE/INACTIVE mode procedures in the second PLMN. The UE transmits a first indication with information on the periodic pattern to the first PLMN. The UE then monitors the occurrence of at least one idle event in the second PLMN and transmits a second indication to the first PLMN upon the occurrence of the event.

Using the proposal, the serving gNodeB the UE is connected to in PLMN-A (e.g., the gNodeB associated to the UE's PCell) is aware of possible gaps the UE requires to perform these IDLE and/or INACTIVE procedures in PLMN-B. Thus, based on the reported information, the serving gNodeB does not schedule the UE during those periods.

However, while performing the IDLE and/or INACTIVE procedures in PLMN-B, the UE may move away from the coverage of the serving gNodeB in PLMN-A (from a cell A1 from the source gNodeB of PLMN-A to a cell A2 from a target gNodeB of PLMN-A) so that thanks to measurement reporting the serving gNodeB triggers a handover (or, more generally, triggers a reconfiguration with synchronization). If that happens, after the handover, the UE connects to the target gNodeB that is not aware of the gaps the UE requires for performing the actions in PLMN-B so that the target gNodeB may schedule the UE in these periods the UE is not listening to PDCCH, which would lead to scheduling failures and unnecessary network transmissions (because the UE is not listening).

3GPP TR 23.761 V1.2.0) discusses how to enable Paging reception for multi-USIM device (section 5.2).

EP 2 910 040 A1 describes a technique to handle UE assistance information upon handover. The UE, source eNodeB, and/or target eNodeB use one or more existing RRC messages already available during HOV to exchange at least one status report comprising UE assistance information. The UE and the target eNodeB are thus able to obtain the same up-to-date UE status without any additional signaling.

3GPP draft R2-2010620 discusses RAN2 impacts of multi-SIM UE notifications on network switching.

### SUMMARY

The claimed subject-matter is defined by the appended claims. The disclosed embodiments of the present disclosure are not to be regarded as necessarily defining claimed subject-matter unless falling within the scope of the appended claims.

As described above, certain challenges currently exist with mobility procedures for multi-SIM user equipment (UE). Certain aspects of the present disclosure and their embodiments may provide solutions to these or other challenges.

For example, particular embodiments provide the target network node (e.g., target gNodeB in a Next Generation Radio Access Network - NG-RAN) with information (e.g.,
periodic pattern) regarding periods and/or gaps the user equipment (UE) requires to perform procedures in a second public land mobile network (PLMN), when the UE is a multi-SIM UE.

Particular embodiments may be classified as UE-centric, where the UE provides information to the target cell, or network-centric. Network-centric embodiments may include radio access network (RAN)-centric where information is stored at the source gNodeB and transferred to the target during handover and/or core network centric where information is stored at a core network node, like an access and mobility management function (AMF), and transferred to the target during handover.

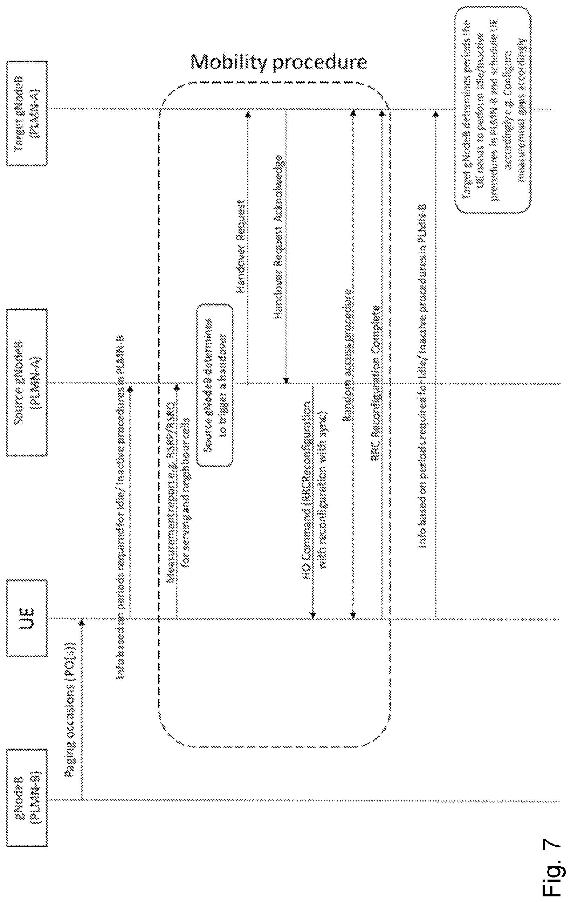

(Embodiments A1 - UE-based solution) - which is not covered by the claims - some embodiments include a method performed by a wireless terminal (also referred to as a UE) capable of operating with multiple USIMs (at least two). The method comprises, if the UE is in CONNECTED in a first PLMN (associated with the first USIM) and is connected to a first cell associated to a first gNodeB and in IDLE/INACTIVE in a second PLMN (associated with the second USIM), determining a pattern preference for performing a set of IDLE/INACTIVE mode procedures in the second PLMN. The method further comprises transmitting an indication with information on the pattern preference to the first PLMN. The indication is transmitted to the first cell associated to the first gNodeB. The method further comprises receiving a handover command (e.g., RRCReconfiguration including a reconfiguration with sync) indicating the UE to perform handover to a second cell associated to a second gNodeB. Upon the handover to the second cell of the second gNodeB, the method comprises transmitting information associated to required gaps for performing idle/inactive procedures in the second PLMN, e.g., at least the same indication sent to the first gNodeB, and/or updated versions of the information based on target cell timing properties (system frame number, synchronization, etc.), or another indication based on the occurrence of at least one idle event in the second PLMN. A simplified version focused on the standard related actions is illustrated in FIGURE 7.

FIGURE 7 is a flow diagram illustrating an example multi-SIM UE handover procedure according to embodiments A1. As illustrated, the UE transmits the information associated to the required gaps for performing idle/inactive procedures in the second PLMN upon handover.

### (Embodiments A2 - UE-based solution) - which is covered by the claims -

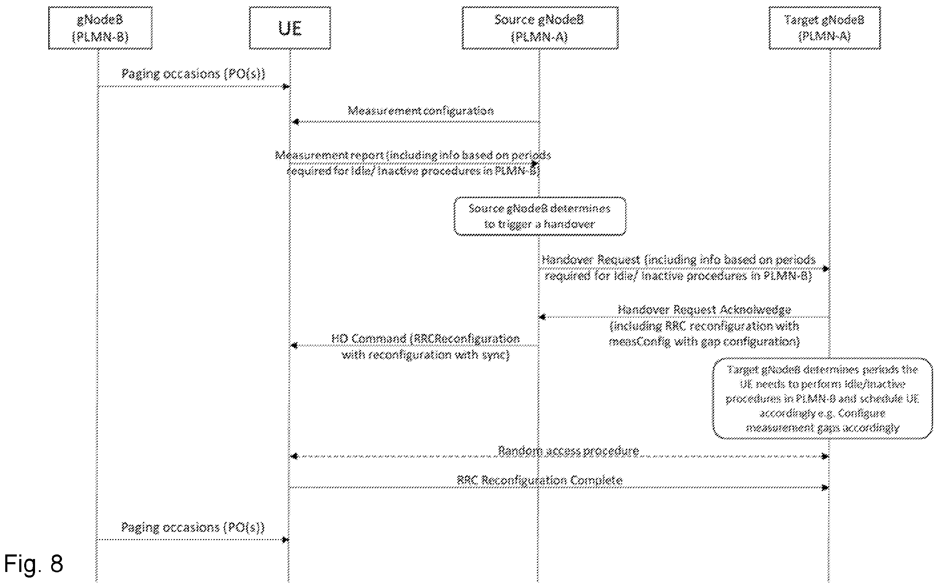

Some embodiments include a method performed by a wireless terminal (also referred to as a UE) capable of operating with multiple USIMs (at least two). The method comprises receiving a measurement configuration from the first gNodeB for performing measurements, e.g., a measConfig field of IE MeasConfigNR including at least one reporting configuration (reportConfig field of IE ReportConfigNR) with an event triggered report type such as an A3 and/or A5 event configuration (as defined in TS 38.331). The method further comprises determining that the entry condition of an event is fulfilled and determining a neighbor cell is a triggered cell, e.g., if the neighbor cell fulfills the entry condition of an event like A3 and/or A5, indicating that this may be a good candidate neighbor cell to be a target for a handover. If the UE is in CONNECTED in a first PLMN (associated with the first USIM) and is connected to a first cell associated to a first gNodeB and in IDLE/INACTIVE in a second PLMN (associated with the second USIM), the method further comprises determining a pattern preference for performing a set of IDLE/INACTIVE mode procedures in the second PLMN. The method further comprises transmitting a measurement report associated to the triggered event (e.g., A3 event triggering a measurement report) and including in the measurement report an indication with information on the pattern preference to the first PLMN. The indication is transmitted to the first cell associated to the first gNodeB. The method further comprises receiving a handover command (e.g., RRC Reconfiguration including a reconfiguration with sync) including a gap configuration (e.g., a measurement gap configuration within measConfig of IE MeasConfigNR where gap configuration is based on the first indication the target gNodeB has received), providing the UE gaps for the UE to perform idle and/or inactive procedures in the second PLMN. The method further comprises performing a handover to the target cell of the target gNodeB (Second gNodeB), i.e., performing random access and transmitting an RRC Reconfiguration Complete and monitoring the second PLMN according to the gap configuration provided in the Handover command. An example is illustrated in FIGURE 8.

FIGURE 8 is a flow diagram illustrating an example multi-SIM UE handover procedure according to embodiments A2. As illustrated, the pattern preference for performing a set of IDLE/INACTIVE mode procedures in the second PLMN are shared between the UE and gNodeB via measurement reports and measurement configurations.

### (Embodiments B1 - RAN-based solution) - which is covered by the claims -

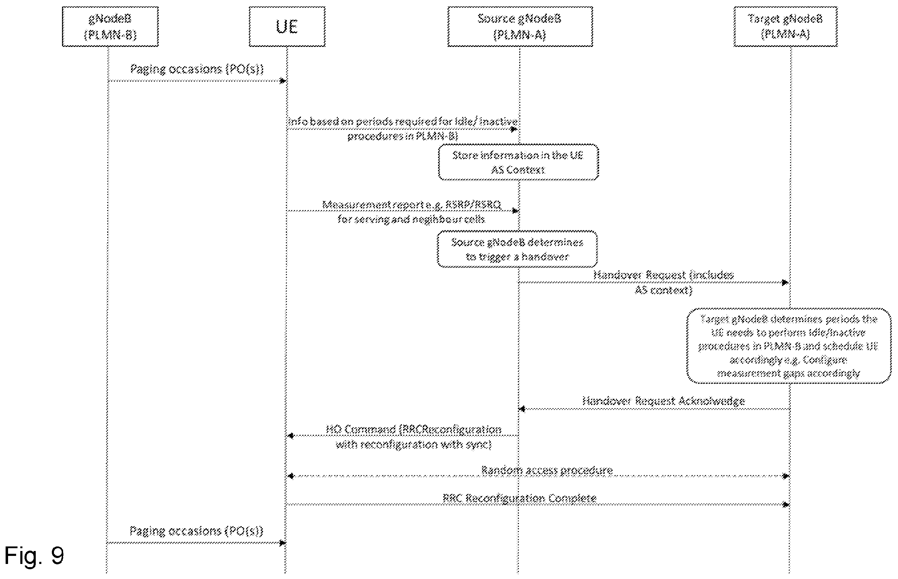

Some embodiments include a method performed by a first network node (also referred to as a gNodeB) connected to a UE operating with multiple USIMs (at least two). The method comprises receiving an indication with information on the pattern preference to the first PLMN. The indication is received in a first cell associated to a first gNodeB. The method further comprises determining to perform a handover to a second cell associated to a second gNodeB and transmitting to the second gNodeB a message (e.g., Handover Request message) including information associated to UE's required gaps for performing idle/inactive procedures in the second PLMN, e.g., at least the same indication received by the first gNodeB and/or updated versions of the information based on target cell timing properties (system frame number, synchronization, etc.) or another indication based on the occurrence of at least one idle event in the second PLMN. The method further comprises receiving from the second gNodeB a message acknowledging the handover (e.g., Handover Request Acknowledgement message) that includes an RRCReconfiguration generated by the target that includes a measurement gap configuration. The method further comprises transmitting to the UE a handover command (e.g., RRC Reconfiguration including a reconfiguration with synchronization) including a gap configuration (e.g., a measurement gap configuration within measConfig of IE MeasConfigNR where gap configuration is based on the indication the target gNodeB has received) providing the UE gaps for the UE to perform idle and/or inactive procedures in the second PLMN. An example is illustrated in FIGURE 9.

FIGURE 9 is a flow diagram illustrating an example multi-SIM UE handover procedure according to embodiments B1. As illustrated, the pattern preference for performing a set of IDLE/INACTIVE mode procedures in the second PLMN are stored in a UE AS context.

### (Embodiments C1- Core Network based solution) - not covered by the claims -

Some embodiments include a method performed by a first network node (also referred to as a gNodeB, operating as source gNodeB in a handover) connected to a UE operating with multiple USIMs (at least two). The method comprises receiving from the UE an indication with information on the pattern preference to the first PLMN. The indication is transmitted to a first cell associated to a first gNodeB. The method further comprises determining to perform a handover and transmitting a Handover Request to a second network node, e.g., target gNodeB and receiving a Handover Request Ack from the second network node, e.g., target gNodeB, including a handover command (i.e., an RRCReconfiguration, including a reconfiguration with synchronization) prepared by the target gNodeB. The method further comprises transmitting the handover command to the UE.

### (Embodiments C2- Core Network based solution) - not covered by the claims -

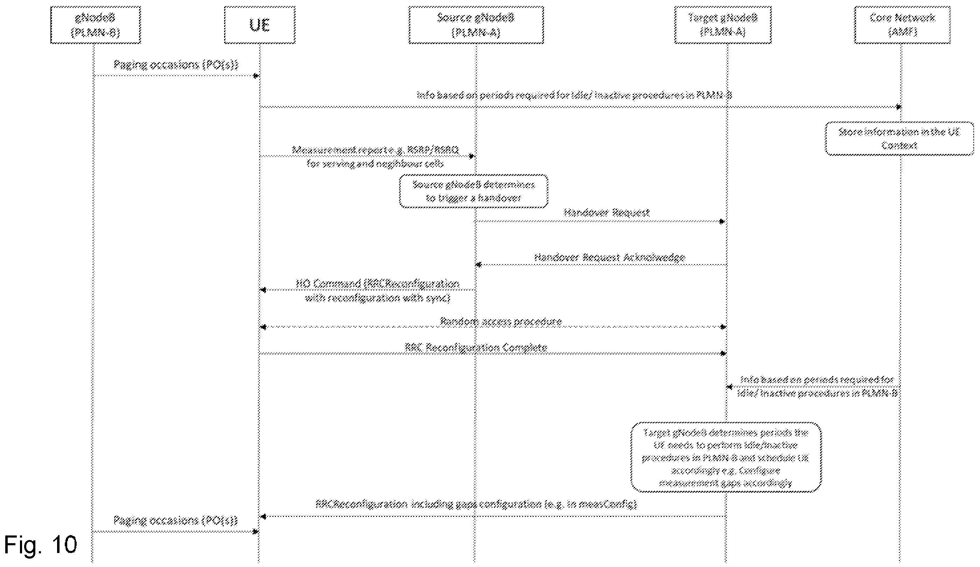

Some embodiments include a method performed by a second network node (also referred to as a gNodeB, operating as target gNodeB in a handover). The method comprises receiving a Handover Request from a first network node, e.g., source gNodeB and transmitting a Handover Request Ack to the first network node, e.g., source gNodeB, including a handover command (i.e., an RRCReconfiguration, including a reconfiguration with synchronization) prepared by the target gNodeB. The method further comprises receiving a message from a core network node, such as an AMF, the message including an indication based on the pattern preferences the UE requires as gap for performing procedures at the second PLMN (e.g., idle/inactive procedure such as cell reselection measurements, acquisition of system information, monitoring of paging occasions, etc.). The method further comprises scheduling the UE based on the information received from the core network node. An example is illustrated in FIGURE 10

FIGURE 10 is a flow diagram illustrating an example multi-SIM UE handover procedure according to embodiments C1 and C2. As illustrated, the target gNodeB receives an indication based on the pattern preferences the UE requires as gap for performing procedures at the second PLMN (e.g., idle/inactive procedure such as cell reselection measurements, acquisition of system information, monitoring of paging occasions, etc.) from the core network.

Certain embodiments may provide one or more of the following technical advantages. For example, in particular embodiments a target gNodeB upon a handover is able to schedule the UE according to the periods the UE is required to perform idle and/or inactive procedures of a second PLMN. This avoids collisions and/or errors when the UE is in a multi-SIM scenario and while connected to a second PLMN (wherein the UE is performing IDLE/INACTIVE state procedures) it needs to perform an inter-cell handover in the first PLMN.

### BRIEF DESCRIPTION OF THE DRAWINGS

For a more complete understanding of the disclosed embodiments and their features and advantages, reference is now made to the following description, taken in conjunction with the accompanying drawings, in which:

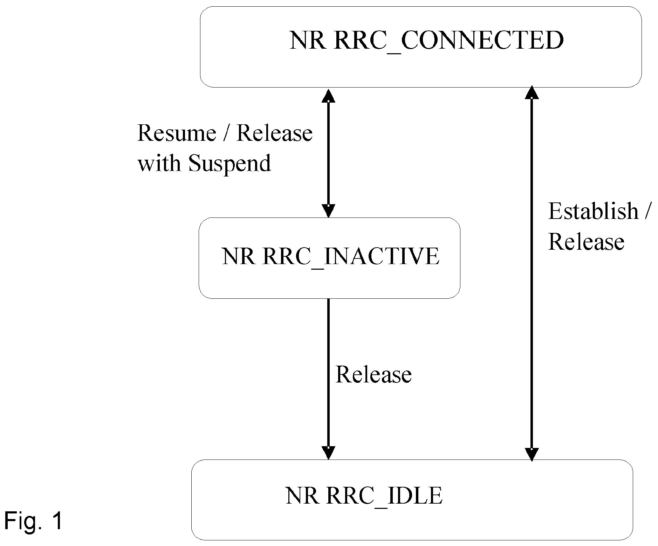

FIGURE 1 illustrates an overview of UE RRC state machine and state transitions in NR;

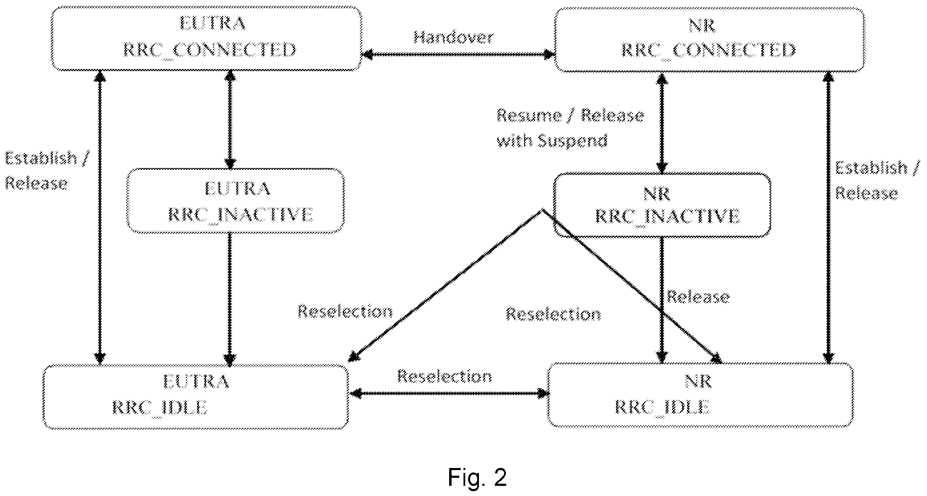

FIGURE 2 illustrates an overview of UE state machine and state transitions in NR as well as the mobility procedures supported between NR/5GC E-UTRA/EPC and E-UTRA/5GC;
FIGURE 3 is a timing diagram illustrating a discontinuous reception (DRX) cycle;
FIGURE 4 is a timing diagram illustrating paging occasions in a radio frame;
FIGURE 5 illustrates paging subframes;
FIGURE 6 is a flow diagram illustrating the basic handover scenario where neither the access and mobility management function (AMF) nor the user plane function (UPF) changes;
FIGURE 7 is a flow diagram illustrating an example multi-SIM UE handover procedure according to embodiments A1;
FIGURE 8 is a flow diagram illustrating an example multi-SIM UE handover procedure according to embodiments A2 which is covered by the claims;
FIGURE 9 is a flow diagram illustrating an example multi-SIM UE handover procedure according to embodiments B1 which is covered by the claims;
FIGURE 10 is a flow diagram illustrating an example multi-SIM UE handover procedure according to embodiments C1 and C2;

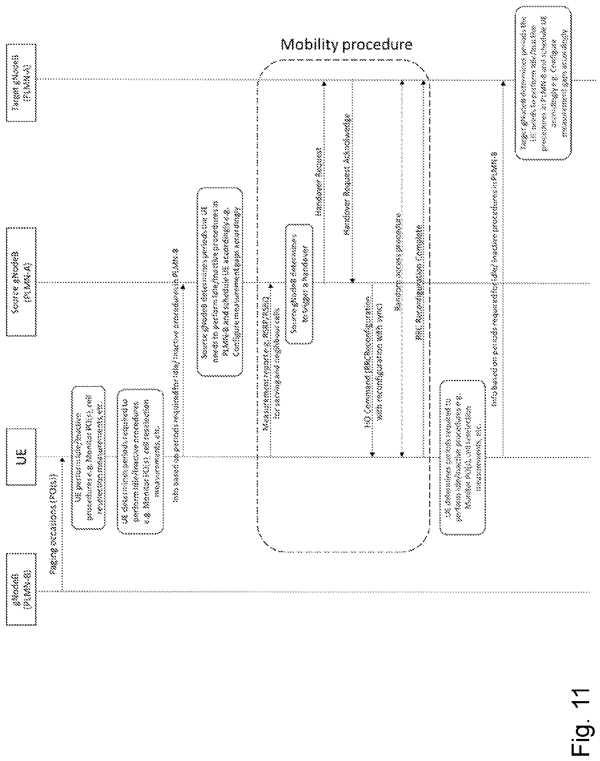

FIGURE 11 is another flow diagram illustrating an example multi-SIM UE handover procedure according to embodiments A1;

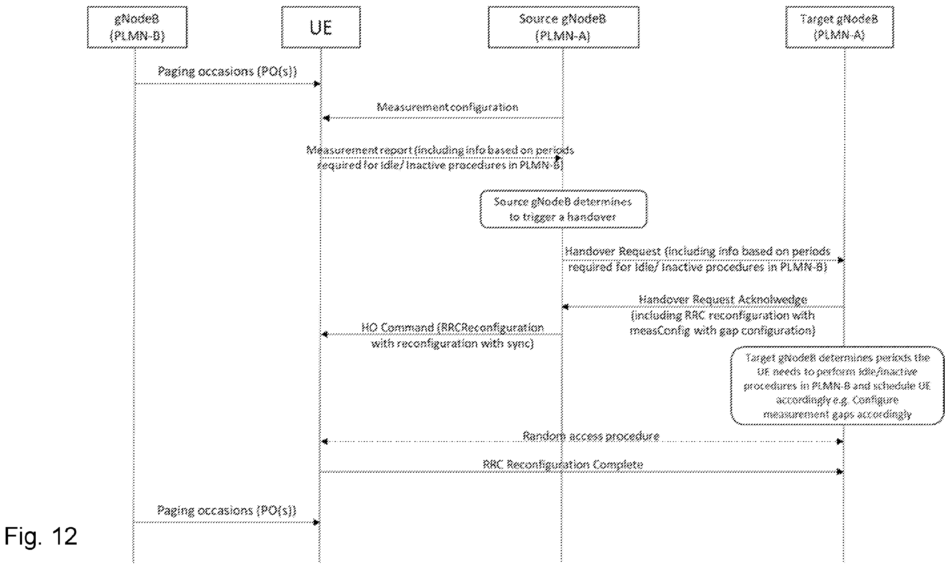

FIGURE 12 is another flow diagram illustrating an example multi-SIM UE handover procedure according to embodiments A2 which is covered by the claims;

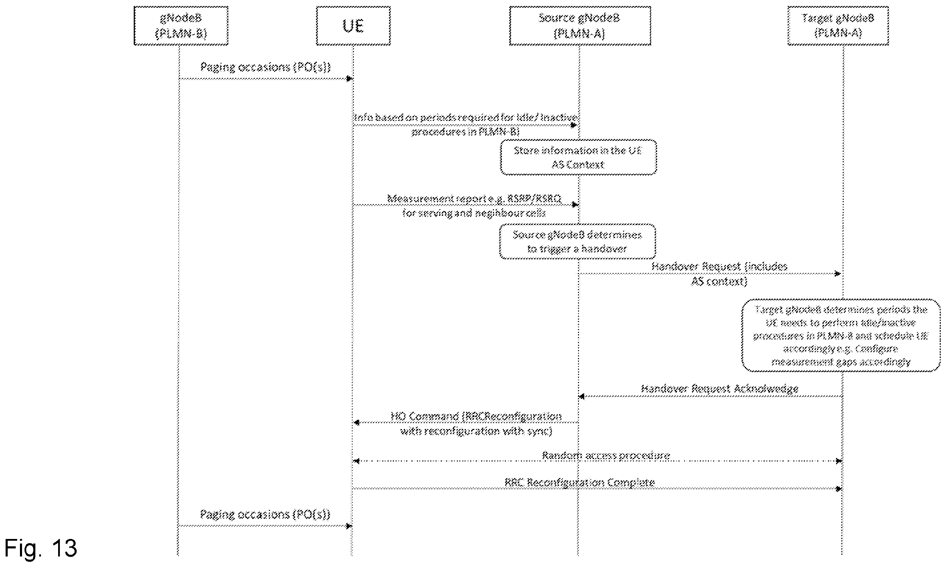

FIGURE 13 is another flow diagram illustrating an example multi-SIM UE handover procedure according to embodiments B1 which is covered by the claims;

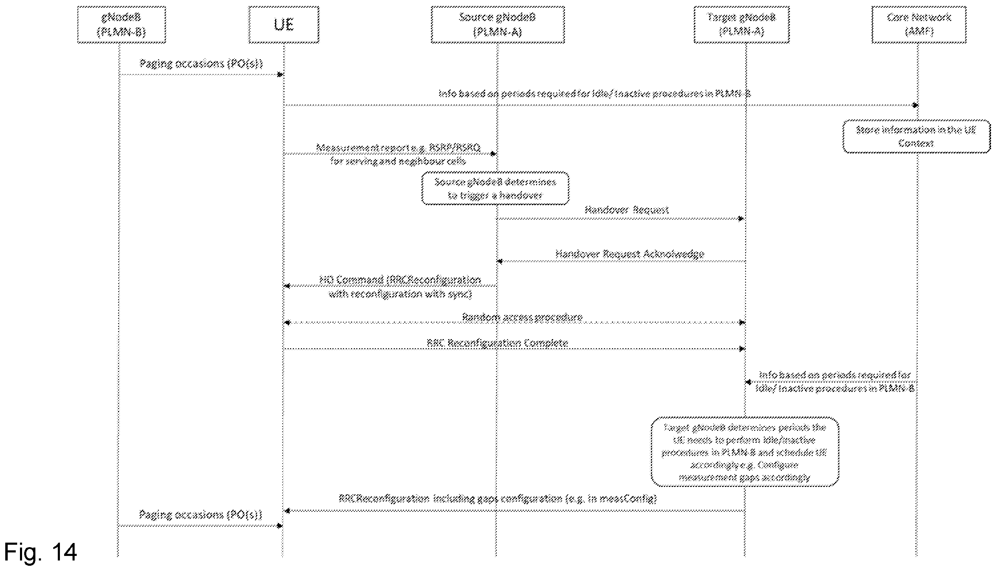

FIGURE 14 is another flow diagram illustrating an example multi-SIM UE handover procedure according to embodiments C1 and C2;

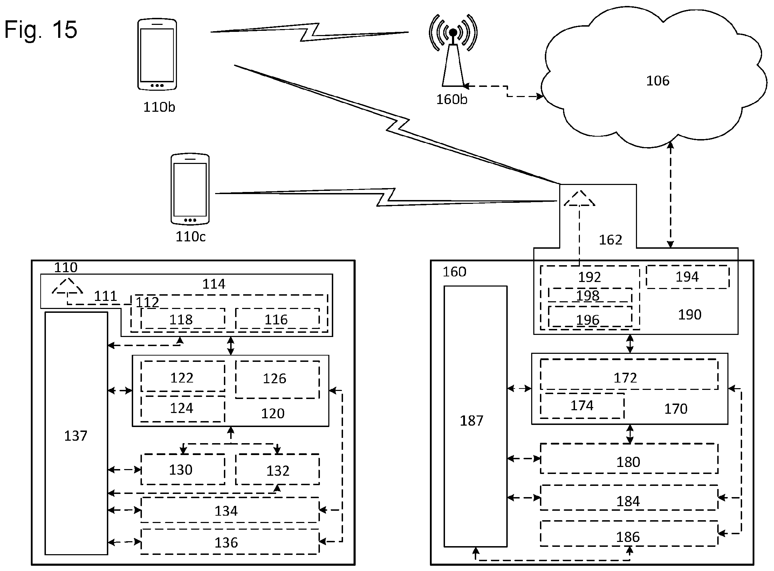

FIGURE 15 is a block diagram illustrating an example wireless network;

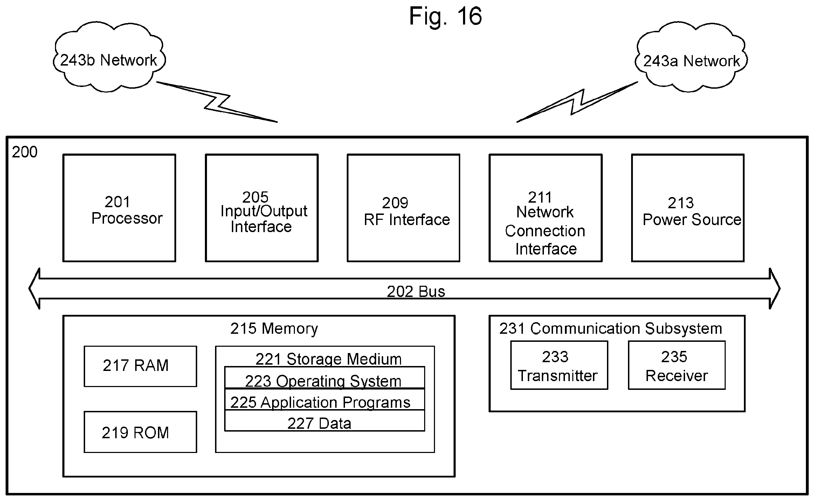

FIGURE 16 illustrates an example user equipment, according to certain embodiments;

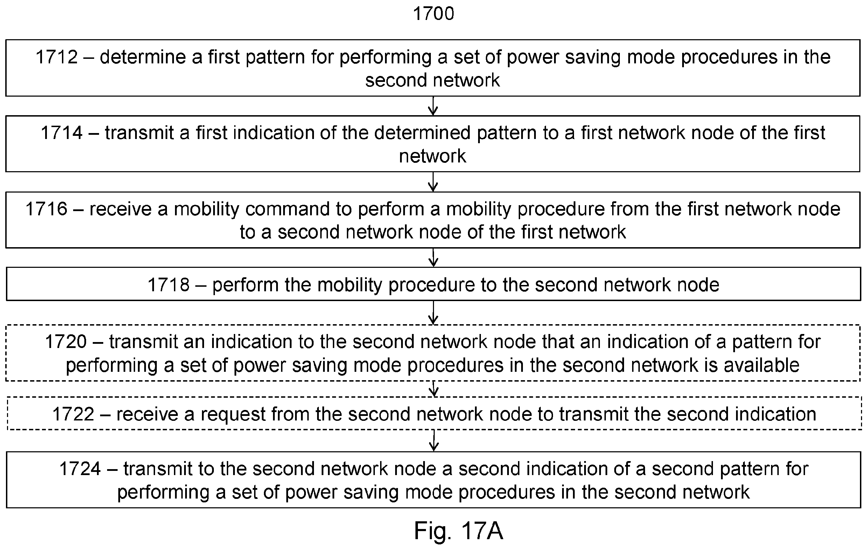

FIGURE 17A is flowchart illustrating an example method in a wireless device, according to certain embodiments;

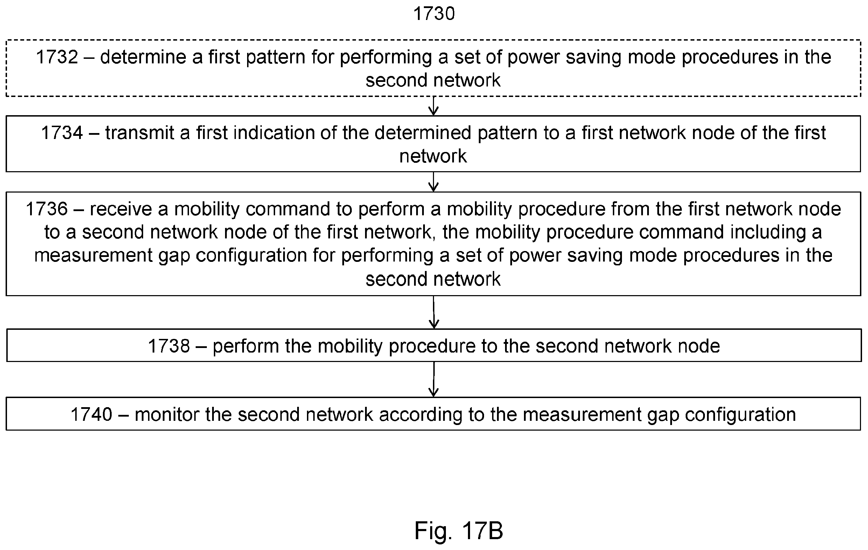

FIGURE 17B is flowchart illustrating another example method in a wireless device, according to certain embodiments which is covered by the claims;

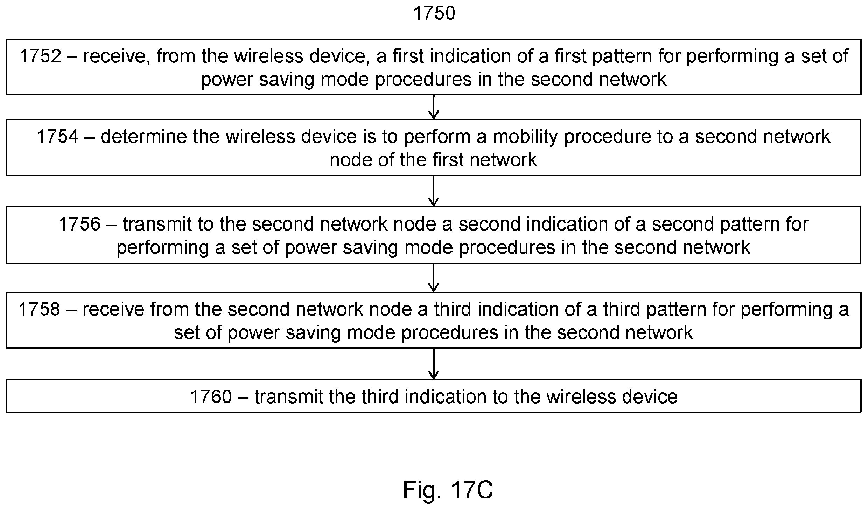

FIGURE 17C is flowchart illustrating an example method in a network node, according to certain embodiments which is covered by the claims;

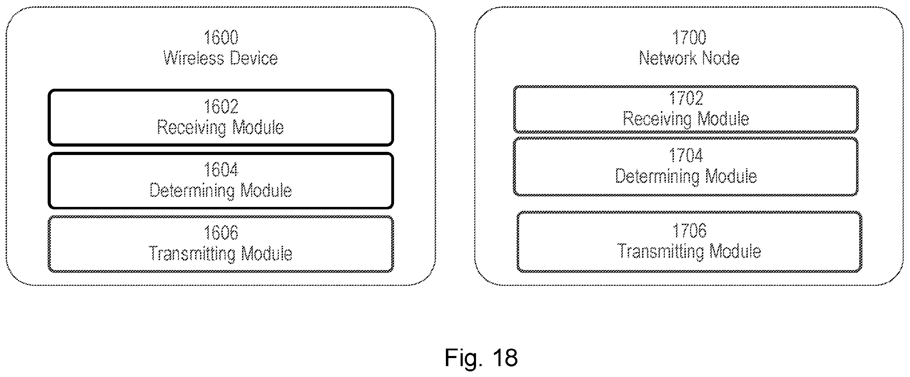

FIGURE 18 illustrates a schematic block diagram of a wireless device and network node in a wireless network, according to certain embodiments;

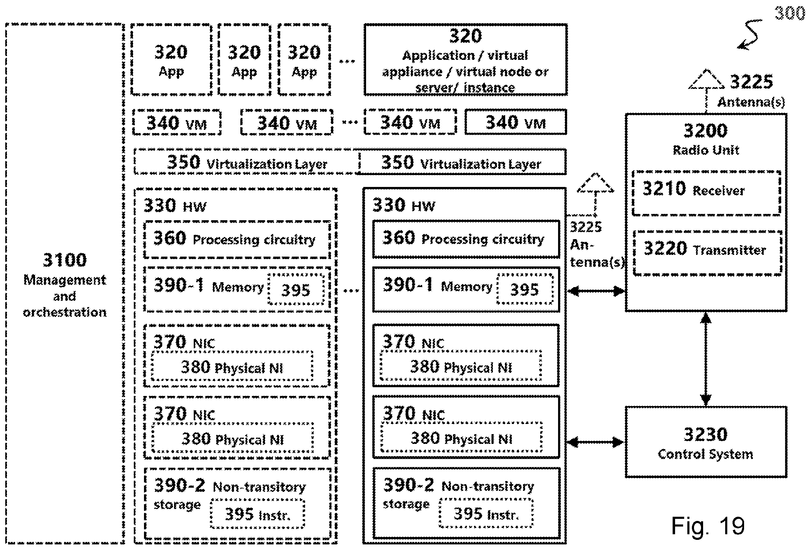

FIGURE 19 illustrates an example virtualization environment, according to certain embodiments;

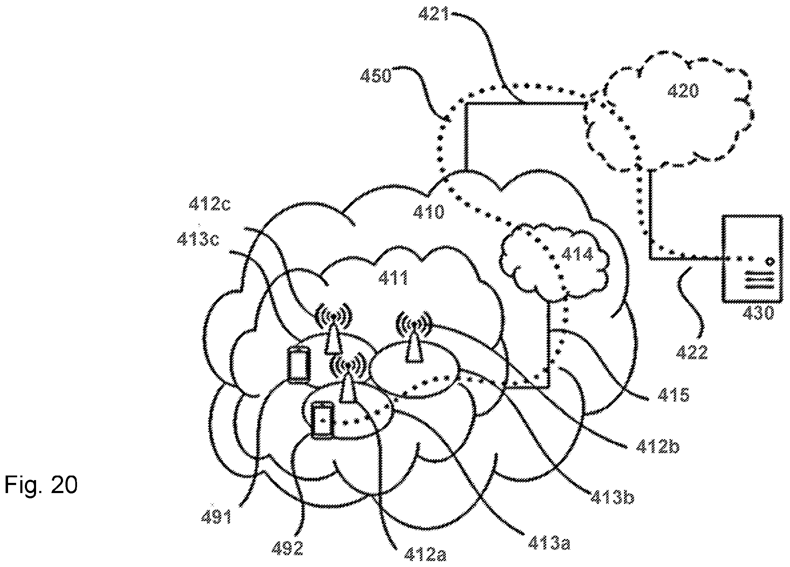

FIGURE 20 illustrates an example telecommunication network connected via an intermediate network to a host computer, according to certain embodiments;

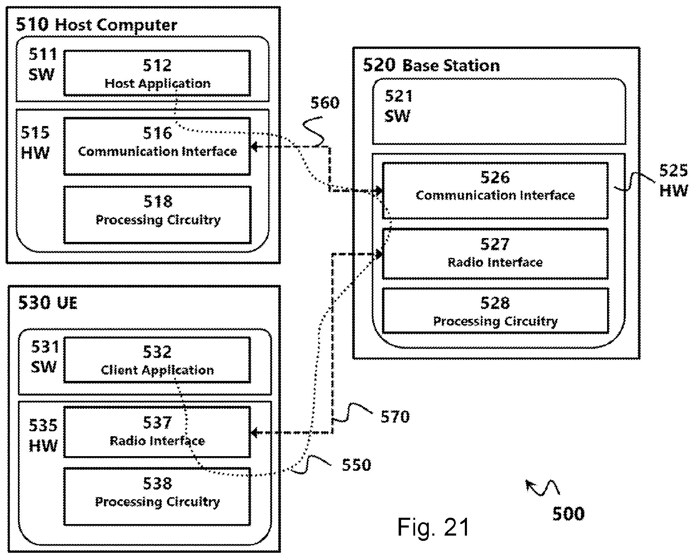

FIGURE 21 illustrates an example host computer communicating via a base station with a user equipment over a partially wireless connection, according to certain embodiments;

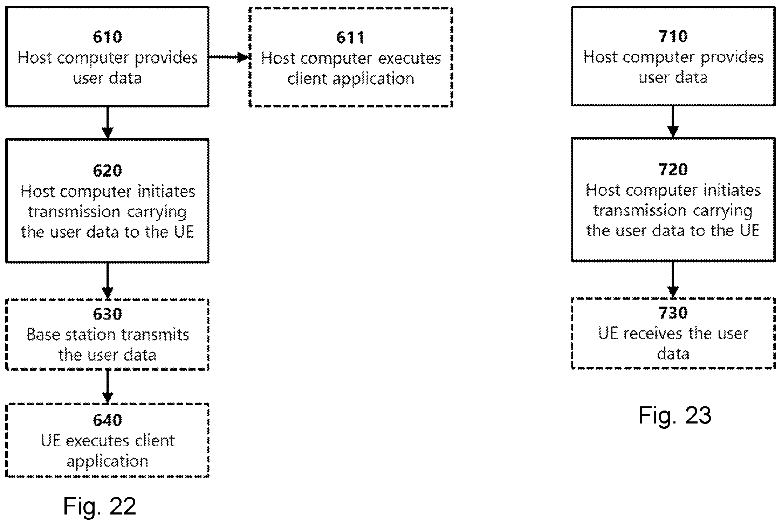

FIGURE 22 is a flowchart illustrating a method implemented, according to certain embodiments;
FIGURE 23 is a flowchart illustrating a method implemented in a communication system, according to certain embodiments;

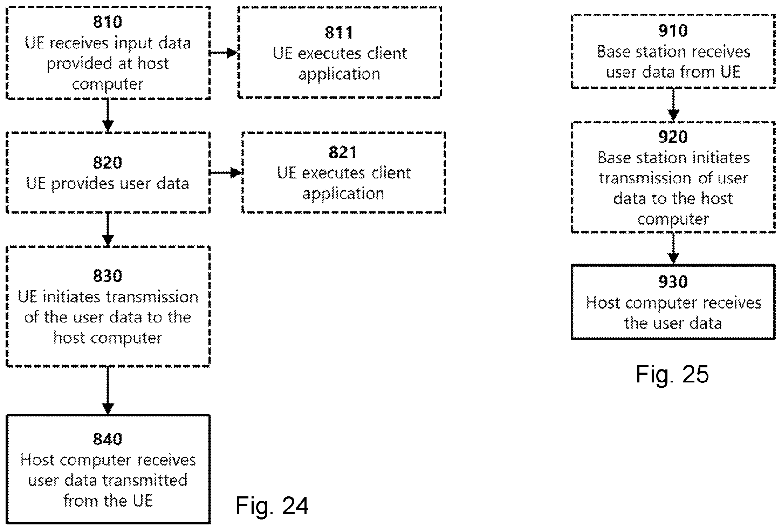

FIGURE 24 is a flowchart illustrating a method implemented in a communication system, according to certain embodiments; and
FIGURE 25 is a flowchart illustrating a method implemented in a communication system, according to certain embodiments.

### DETAILED DESCRIPTION

As described above, certain challenges currently exist with mobility procedures for multi-SIM user equipment (UE). Certain aspects of the present disclosure and their embodiments may provide solutions to these or other challenges.

For example, particular embodiments provide the target network node (e.g., target gNodeB in a Next Generation Radio Access Network - NG-RAN) with information (e.g., periodic pattern) regarding periods and/or gaps the UE requires to perform procedures in a second public land mobile network (PLMN), when the UE is a multi-SIM UE.

Particular embodiments are UE-centric, where the UE provides information to the target cell, or network-centric. Network-centric embodiments may include radio access network (RAN)-centric where information is stored at the source gNodeB and transferred to the target during handover and/or core network centric where information is stored at a core network node, like an access and mobility management function (AMF), and transferred to the target during handover.

Particular embodiments are described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

As used herein, the terms public land mobile network (PLMN), system, network are used inter-changeably to refer to an entity associated to a USIM at the UE. Also, MU-SIM, MUSIM, or MultiSIM are used inter-changeably.

As used herein, the term RRC_CONNECTED is used to indicate the RRC state, and CM CONNECTED (or 5GC_CONNNECTED) to indicate the state from the core network perspective, or simply use the term CONNECTED to refer to any of these terms. However, for the purpose of the embodiments herein, these could be used inter-changeably to refer to a connected UE that is not performing Idle mode procedures (as specified in 38.304 or 36.304).

Particular embodiments address how to create/generate interruptions or "gaps" in the communication for a UE that is communicating in CM_CONNECTED/RRC_CONNECTED mode with PLMN1 using credentials from USIM1. The gaps are then subsequently used by the UE to switch to another system (PLMN2) utilizing other credentials (USIM2) to, e.g., listen for pages. These gaps are informed to a target cell of a target gNodeB upon a handover, e.g., by the UE and/or by the source gNodeB including gap information in the UE AS context.

The network may configure the UE to provide mainly two different indications during a handover: (a) UE assistance information on gaps that the network may account for while the UE is in RRC_CONNECTED; and (b) a UE indication that it will leave (or that it needs to leave, i.e., that it needs to enter RRC_IDLE or RRC_INACTIVE or simply that it cannot monitor DCIs/PDCCH) in the network where it is currently in RRC_CONNECTED, to perform operations in another network.

It is expected that (a) may be used mostly for periodical/predictable operations that a multi-SIM UE should perform in another network, while (b) may be mostly used for dynamic/less predictable operations to be performed in another network. In both cases, the UE absence in the network where it is currently in RRC CONNECTED can be considered short and the network may thus decide to keep the UE in RRC CONNECTED. Moreover, (b) may also be sent even during the intervals where the UE formerly indicated (through 9a)) to the network that it would not be available, to allow for the case when, e.g., an event based condition was triggered and the UE may have to switch to another network, but possibly for longer time than the one indicated in the "gaps" provided by (a) (but that may still be short duration activities), e.g. to perform cell reselection.

In response, the network (e.g., the target network node during a handover) may either "decline" the request from the UE to have these gaps (e.g., for operation with the PLMN2) or proposed modified version of the gaps. If a modified version of the gaps is received, the UE adjusts the operations with PLMN2 accordingly, e.g., if shorter periods are provided the UE can monitor fewer paging occasions in PLMN2 than what has been configured.

In particular embodiments, the UE needs to monitor paging in a second PLMN (e.g., PLMN2), for example to allow the second PLMN to reach UEs in RRC_IDLE and in RRC_INACTIVE state through *Paging* messages, and to notify UEs in RRC_IDLE, RRC_INACTIVE and RRC_CONNECTED state of system information change and ETWS/CMAS indications through *Short Messages.*

Some embodiments include indication(s) sent to the target gNodeB. In some embodiments, a method comprises a UE in CONNECTED in a first PLMN (associated with the first USIM) and in IDLE/INACTIVE in a second PLMN (associated with the second USIM), determining a periodic pattern for performing a set of IDLE/INACTIVE mode procedures in the second PLMN and indicating that the target gNodeB upon handover, either by the UE transmitting it after the handover or by the source gNodeB transmitting to the target gNodeB. Thus, the UE may generate periodic patterns that may be used to configure interruptions or "gaps" in the communication for a UE that is communicating in CM_CONNECTED/RRC_CONNECTED mode with PLMN1 using credentials from USIM1 (for the purpose of performing "predictable" or periodic procedures in PLMN2). The gaps are then used by the UE to switch to another system (PLMN2) using other credentials (USIM2) to, e.g., listen for pages.

The periodic pattern is based on at least the time properties of the following procedures in the second PLMN. One procedure is paging frame(s) (PFs) and paging occasions (POs) configured for the UE. In one option, the UE does not need to consider all POs but a subset of them. While that may degrade paging performance in the second PLMN, it avoids degrading the throughput performance in the first PLMN.

If a subset of POs is used, then, to eliminate the UE becoming unreachable, the UE informs the second PLMN about the selected subset of POs according to following options. The UE can inform the second PLMN over non-access stratum (NAS) providing the information about the subset of POs selected for monitoring to the core network (CN) serving the UE, e.g., to the serving AMF. The serving AMF includes the subset of POs selected for monitoring in the paging message sent over the RAN/CN interface, e.g., NG Application Protocol (NGAP) paging message. The RAN, e.g. gNB, conducting the paging process takes the subset of POs selected for monitoring into consideration when selecting what POs to use. If the UE is in RRC_INACTIVE state in second PLMN, the UE informs the RAN, e.g. the gNB, about the subset of POs selected for monitoring using the RRC protocol and the gNB stores this information in the UE access stratum (AS) context. The gNB hosting the UE AS Context uses this information to determine valid POs at subsequent paging process.

one sub-option defines a PLMN priority, e.g., first PLMN has higher priority than second PLMN. In that case, the UE can reduce the paging monitoring in the second PLMN so it reduces the gaps (e.g., reduces duration of the window pattern and/or increases periodicity, making less frequent leaves from the first PLMN). If the second PLMN has higher priority, the UE does not perform this action and generates a pattern for which it needs to monitor all configured paging occasions configured by the second PLMN. The prioritization may be determined by the end user, e.g., via application layer at the UE. The prioritization may be informed from the UE the lowest priority PLMN, so it is aware of that and prepared to accept lower performance.

Other procedures performed in the second PLMN include: DRX cycle configuration; periods the UE needs to perform serving cell measurements for S-criteria evaluation; periods the UE needs to perform inter-frequency and inter-RAT measurements for cell detection; and periodic registration area updates.

In one embodiment, the periodic pattern is a set of time domain windows (or "gaps") repeated periodically. In one option, the periodic pattern is defined based on time domain units associated to the frame structure of the first PLMN1, so that PLMN2 easily interprets how to act based on the report. To provide those "gaps", particular embodiments consider that the UE should translate possible activities to be performed in, e.g., PLMN2 to "gaps" to be used in the network within PLMN1, referred to as "gap mapping".

Some properties of the pattern may be window duration, window periodicity and offset for starting the first window in the pattern (having a time reference of the first or the second PLMN) An example of signaling is shown below:

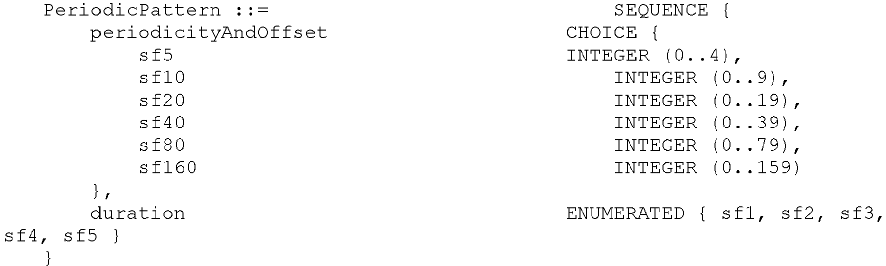

| *SSB-MTC* field descriptions |
|---|
| *duration* |
| Duration of the window in which the UE wants to perform operations in the second PLMN (e.g. PLMN2) if the UE is operating in multi-SIM. It is given in number of subframes associated to the first PLMN (see TS 38.213, clause 4.1), i.e., the PLMN receiving the indication of the Periodic Patter. |
| *periodicityAndOffset* |
| Periodicity and offset of the Periodic Pattern in which the UE wants to perform operations in the second PLMN (e.g. PLMN2) if the UE is operating in multi-SIM. Periodicity and offset are given in number of subframes. |

Upon reception of these, in one embodiment, the network interprets these patterns and sets up gaps in accordance with the received *periodicityAndOffset* parameter (providing *Periodicity* and *Offset* value for the following condition). The first subframe of each Periodic Pattern occasion occurs at an SFN and subframe of the NR SpCell meeting the following condition:

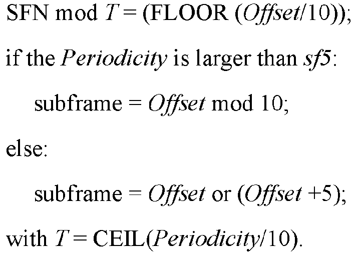

In some embodiments, the reported information may include any one or more of the following: (a) preferred connected mode DRX cycle configuration (e.g., connected mode DRX preferences can be reported to reflect periods where the UE may switch to another network); (b) preferred measurement gap configuration (e.g., a minimum time the UE needs for the gaps and whether it needs it for only FR1, only FR2 or per UE gaps); (c) preferred radio frames to be silent (e.g., where the first PLMN should not schedule the UE); and/or (d) preferred subframes to be silent (e.g., where the first PLMN should not schedule the UE).

Further examples on how the translation and signaling may be performed are provided below.

The second indication (and fourth, or information related to it) can be related to at least one of the following events in the first PLMN. Some events are periodic events, e.g., inter-frequency cell reselection measurements. After the event start trigger is fulfilled, it becomes a periodic event. Thus, a UE may send an update of the periodic pattern considering the durations the UE needs to perform these measurements, e.g., including additional occasions like in a delta signaling.

In one option, the second indication is of the same type of indication as the first indication, but containing only additional information (compared to the previously indicated periodic pattern), determined by the UE based on the need to perform inter-frequency measurements, and including in the updated pattern additional occasions for these measurements (or increasing the duration of the window).

In one option, the update of the pattern replaces the previous pattern. This means the new pattern can be of the same field/IE of the previous pattern.

In one option, the UE includes in the indication the event/cause value (or a list of events/causes), e.g. inter-frequency measurement in this case, that may enable the network to determine a new pattern, or to understand the reason why the UE needs the gaps.

Some events are more aperiodic, i.e., they do not lead to an additional periodic pattern. There are different ways to handle the aperiodic idle events, regarding how to indicate the event to the network. The usage may depend, e.g., how long the UE is expected to be absent.

In some embodiments the UE indicates "Bye first PLMN, I will be away for X seconds."

In some embodiments, the UE requests from the first PLMN "May I leave for X seconds?" The UE waits for confirmation from first PLMN and, if it receives, it leaves; otherwise it does not.

In some embodiments, the UE informs "I will be away (no time information)." When the UE is done, it informs the first PLMN that it is back, e.g., over PUCCH, RACH, RRC, etc.

In some embodiments, the UE informs "I will be away (with time information)." When the UE is done, it just returns without informing.

Some events include one-time short events (i.e., not possible to know a periodicity associated, or aperiodic pattern), e.g., cell reselection and acquisition of system information in the newly selected cell. In this case, the UE can include in the second indication information such as the time off it needs to complete the procedure.

In one option, as the procedure is expected to be completed within a short time (10ms or 100s of ms), the UE does not expect a response from the first PLMN when it indicates that is leaving for a short time. In other words, the UE sends the message and directly switches to the second PLMN to perform the procedure.

As another option, the UE opportunistically continues and performs the actions in the second PLMN without indicating its absence to the first PLMN. If cell reselection is being triggered, it may be because the UE was performing measurements, i.e., within the configured periodic pattern. Thus, the UE just continues the operations like SIBs acquisition.

It may be that while the UE was performing these operations outside the configured pattern, the network (first PLMN) tries to schedule something and fails, because the UE was not monitoring PDCCH on the first PLMN. Thus, one option is that upon returning from a procedure in the second PLMN performed outside the configured gaps/pattern (i.e., opportunistically), the UE informs the first PLMN what has happened in case the first PLMN wants to perform some root cause analyses, e.g., the UE indicates that it was performing system information acquisition in the second PLMN, or simply a one shot event. Or, alternatively, the UE indicates that and when it has finished the operation it indicates to the first PLMN, e.g., with a PUCCH, scheduling request, random access, an RRC message, etc.

Some events include more unpredictable one-time long events, e.g., entering connected state after paging reception. This is a one-time but relatively long event and quite unpredictable, i.e., not possible to know a periodicity associated, or aperiodic pattern.

In one option, the UE transmits the second indication and waits for a message (e.g., response) from the network, at least for some time, before it leaves/switches to the second PLMN to respond to paging by transitioning from IDLE to CONNECTED.

In one option, upon transmitting the second indication, the UE starts a timer. Upon receiving a response (e.g., indication to transition to IDLE state) the UE stops the timer. If the timer expires, the UE enters IDLE and indicates a failure to higher layers.

In one option, the second indication is an indication that the UE wants to enter a dormant state, e.g., like IDLE, in the first PLMN. Notice that on the second PLMN, this would lead to a bit longer time for the UE to respond to paging (so that it could be beneficial for the second PLMN to be aware this may happen, e.g., by knowing this is a multi-SIM UE).

Some events include more predictable one-time long, e.g., mobility registration area update (RAU). This is a one-time but relatively long event, though different from paging it can be a bit more predictable.

In one option, the UE transmits the second indication and waits for a message (e.g., response) from the network, at least for some time, before it leaves/switches to the second PLMN to conduct RAU by transitioning from Connected to Idle in the first PLMN and transitioning from IDLE to CONNECTED in the second PLMN.

In one option, upon transmitting the second indication, the UE starts a timer. Upon receiving a response (e.g., indication to transition to IDLE state) the UE stops the timer. If the timer expires, the UE enters IDLE and indicates a failure to higher layers.

In one option, the second indication is an indication that the UE wants to enter a dormant state, e.g., like IDLE, in the first PLMN. Notice that on the second PLMN, this would lead to a bit longer time for the UE to become reachable (so that it could be beneficial for the second PLMN to be aware this may happen, e.g., by knowing this is a multi-SIM UE, e.g. by having a more relaxed paging strategy configuration).

In one option, each procedure can be indicated to the first PLMN with the indication. For example, it may be pre-determined that for a given procedure the UE does not expect to be transitioned by the first PLMN to RRC_IDLE, e.g., if a short time is needed for completing the procedure. Then, the UE does not need to wait for a message in the first PLMN before actually continuing with the second PLMN.

If not pre-determined, the UE may wait for some time for a response from the first PLMN. The response may be a message changing the DRX cycle in the first PLMN to a longer cycle (so the UE can complete its action in the second PLMN), e.g., a MAC CE indicating the usage of a long DRX cycle in the first PLMN. The UE may start a timer for waiting for the response. If the timer expires, the UE enters RRC_IDLE in the first PLMN, performs actions upon and leave to the first PLMN.

In one option, each event may be indicated to the first PLMN so the first PLMN may determine which action to take, e.g., change DRX cycle to long DRX, suspend the UE, release the UE, or keep the UE in connected but stop scheduling for some time.

An example of the first and/or second and/or third and/or fourth indications is shown in the following. For the first indication the UE translates its activities to be performed in the network within PLMN2 to simple gaps to be provided for the network within PLMN1 (i.e., "gap mapping"). In this manner, the latter network does not need to understand deployment aspects related to the PLMN2 and may account just for interruptions within the connection of the UE.

An example of the configuration associated to the first and/or second and/or third and/or fourth indication is provided below for 38.331 (but can be similarly applicable to 36.331 as well).

The IE *OtherConfig* contains configuration related to miscellaneous other configurations.

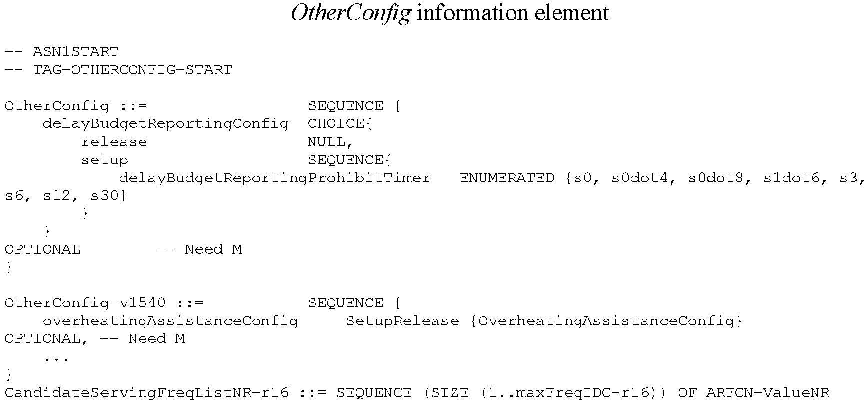

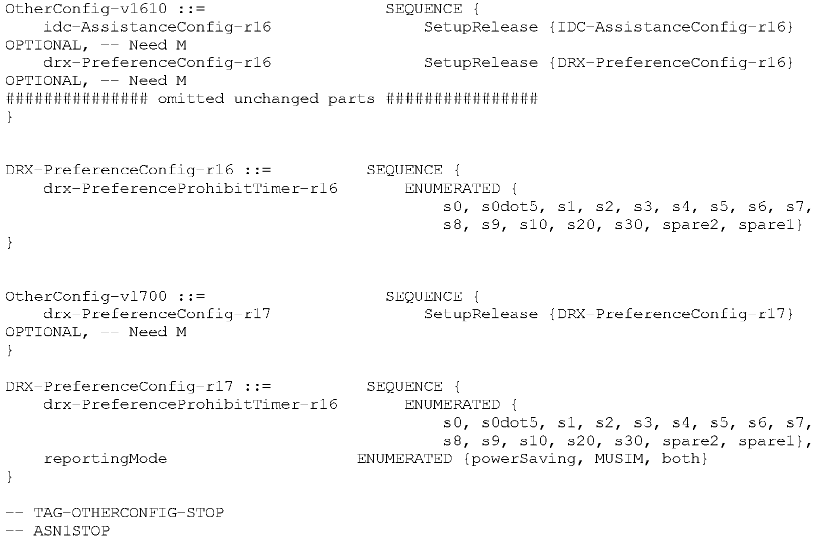

| *OtherConfig* field descriptions |
|---|
| *drx-PreferenceConfig* |
| Configuration for the UE to report assistance information to inform the gNB about the UE's DRX preferences for power saving and/or MU-SIM operation. If *drx-PreferenceConfig-r16* is configured, the UE is allowed to report DRX preferences for power saving. If *drx-PreferenceConfig-r17* is configured, the UE report on DRX preferences may correspond to power saving, MU-SIM or both power saving and MU-SIM. The gNB cannot configure both *drx-PreferenceConfig-r16* and *drx-PreferenceConfig-r17.* |
| *drx-PreferenceProhibitTimer* |
| Prohibit timer for DRX preferences assistance information reporting. Value in seconds. Value *s0* means prohibit timer is set to 0 seconds, value *s0dot5* means prohibit timer is set to 0.5 seconds, value *s1* means prohibit timer is set to 1 second and so on. |
| *idc-AssistanceConfig* |
| Configuration for the UE to report assistance information to inform the gNB about UE detected IDC problem. |
| *reportingMode* |
| Indicates whether the UE report on DRX preferences should correspond to power saving purposes, MU-SIM purposes, or both power saving and MU-SIM. |
| |

The *UEAssistanceInformation* message is used for the indication of UE assistance information to the network.
Signalling radio bearer: SRB1, SRB3
RLC-SAP: AM
Logical channel: DCCH
Direction: UE to Network

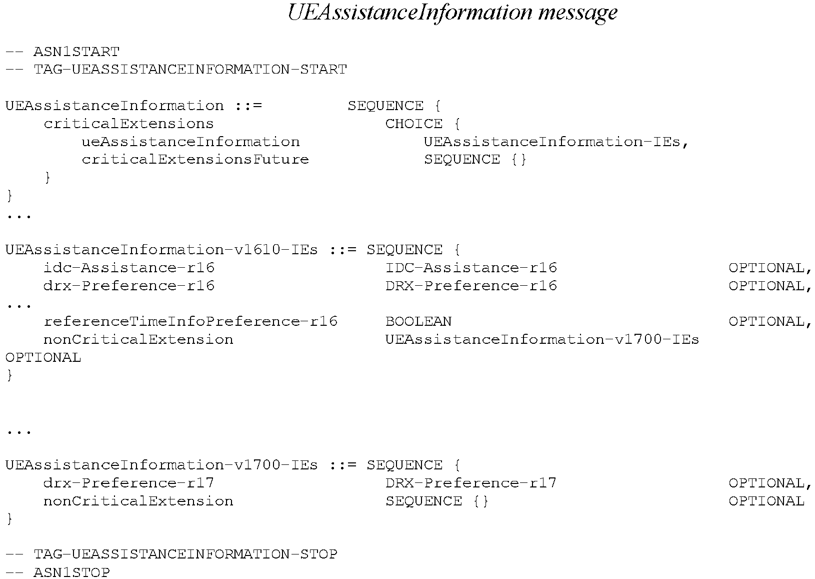

| *UEAssistanceInformation* field descriptions |
|---|
| *drx-Preference-r16, drx-Preference-r17* |
| Indicates the UE-preferred DRX configurations. The field *drx-Preference-r16* indicates the UE preferences for UE power saving purposes only. The field *drx-Preference-r17* indicates the UE preferences for UE power saving purposes and/or MU-SIM connection purposes, according to *DRX-PreferenceConfig-r17.* |
| *interferenceDirection* |
| Indicates the direction of IDC interference. Value *nr* indicates that only NR is victim of IDC interference, value *other* indicates that only another radio is victim of IDC interference and value *both* indicates that both NR and another radio are victims of IDC interference. The other radio refers to either the ISM radio or GNSS (see TR 36.816). |

| *UEAssistanceInformation* field descriptions |
|---|
| *messageSize* |
| Indicates the maximum TB size based on the observed traffic pattern. The value refers to the index of TS 38.321, table 6.1.3.1-2. |
| *minSchedulingOffsetPreference* |
| Indicates the UE's preferences on *minimumSchedulingOffset* of cross-slot scheduling for power saving. |

| *DRX-Preference* field descriptions |
|---|
| *preferredDRX-InactivityTimer* |
| Indicates the UE's preferred DRX inactivity timer length. Value in ms (millisecond). *ms0* corresponds to 0, *ms1* corresponds to 1 ms, *ms2* corresponds to 2 ms, and so on. If the field is absent from the *DRX-Preference* IE, it is interpreted as the UE having no preference for the DRX inactivity timer. |
| *preferredDRX-LongCycle* |
| Indicates the UE's preferred long DRX cycle length. Value in ms. *ms10* corresponds to 10ms, *ms20* corresponds to 20 ms, *ms32* corresponds to 32 ms, and so on. If *preferredDRX-ShortCycle* is provided, the value of *preferredDRX-LongCycle* shall be a multiple of the *preferredDRX-ShortCycle* value. If the field is absent from the *DRX-Preference* IE, it is interpreted as the UE having no preference for the long DRX cycle. |
| *preferredDRX-ShortCycle* |
| Indicates the UE's preferred short DRX cycle length. Value in ms. *ms2* corresponds to 2ms, *ms3* corresponds to 3 ms, *ms4* corresponds to 4 ms, and so on. If the field is absent from the *DRX-Preference* IE, it is interpreted as the UE having no preference for the short DRX cycle. |
| *preferredDRX-ShortCycleTimer* |
| Indicates the UE's preferred short DRX cycle timer. Value in multiples of *preferredDRX-ShortCycle.* A value of 1 corresponds to *preferredDRX-ShortCycle,* a value of 2 corresponds to 2 ** preferredDRX-ShortCycle* and so on. If the field is absent from the *DRX-Preference* IE, it is interpreted as the UE having no preference for the short DRX cycle timer. A preference for the short DRX cycle is indicated when a preference for the short DRX cycle timer is indicated. |

Some embodiments include UE-based solutions (Embodiments A1). Some embodiments include a method performed by a wireless terminal (also referred to as a UE) capable of operating with multiple USIMs (at least two). The method comprises, if the UE is in CONNECTED in a first PLMN (associated with the first USIM) and is connected to a first cell associated to a first gNodeB and in IDLE/INACTIVE in a second PLMN (associated with the second USIM), determining a pattern preference for performing a set of IDLE/INACTIVE mode procedures in the second PLMN.

The method further comprises transmitting an indication with information on the pattern preference to the first PLMN. The indication is transmitted to the first cell associated to the first gNodeB. In some embodiments, the indication is transmitted in an RRC message to the gNodeB. In some embodiments, the indication is transmitted in a NAS message (possibly encapsulated in an RRC message) to a Core Network (CN) node, such as an Access and Mobility Management Function (AMF).

The method further comprises receiving a handover command (e.g., RRCReconfiguration including a reconfiguration with synchronization) indicating the UE to perform handover to a second cell associated to a second gNodeB. Upon the handover to the second cell of the second gNodeB, the method further comprises transmitting at least one of the following indications.

One indication includes information on the pattern preference to the first PLMN. The indication may be transmitted to the second cell associated to the second gNodeB (e.g., target gNodeB). In one option, the indication is transmitted if the second gNodeB and the first gNodeB are the same, e.g., in an intra-gNodeB handover. That may be determined by the UE, for example, by an indication in the handover command that security key refresh is not required (which is an indication that the target cell is associated to the source gNodeB).

In one option, the UE does not transmit the first indication if the second gNodeB and the first gNodeB are the same, e.g., in an intra-gNodeB handover. That may be determined by the UE, for example, by an indication in the handover command that security key refresh is not required (which is an indication that the target cell is associated to the source gNodeB).

In one option, whether to transmit the indication is indicated in the handover command (e.g., RRC Reconfiguration) the UE receives. For example, the handover command may indicate that the UE needs to transmit the first indication to the target cell upon handover.

The indication may include information derived from the indication with information on the pattern preference sent to the first PLMN, wherein the indication is transmitted to the second cell associated to the second gNodeB (e.g., target gNodeB).

The indication may include an indication of a new periodic pattern (which may be, e.g., interpreted as an update to the previous pattern transmitted to the first gNodeB, or an indication based on the occurrence of at least one idle event in the second PLMN) for performing a set of IDLE/INACTIVE mode procedures in the second PLMN.

A periodic pattern for multi-SIM, in general, may be based on time domain radio properties (e.g., frame number, subframes, etc.) that differs in source and target cells. Thus, the UE may need to recalculate/determine a new periodic pattern to be indicated to PLMN-A in a handover, as a pattern may need to be derived from radio properties of PLMN-A, so that PLMN-A can interpret when it should not schedule information to the UE (so the UE can perform procedures towards PLMN-B) and/or when it needs to determine a gap configuration accordingly. So, even if the paging occasions and periods required for idle/inactive measurements at PLMN-B do not change before and after the handover, the indication the network needs to receive for assisting its scheduling of the UE may need to be updated (i.e., periodic pattern) because that can be based on properties of the cell the UE connects to in PLMN-A, which in this case is going to be the second cell (a target cell) of the second gNodeB.

In one option, the indication is determined and transmitted by the UE when the second gNodeB and the first gNodeB are not the same, e.g., in an inter-gNodeB handover. That may be determined by the UE, for example, by an indication in the HO command that security key refresh is required (which is an indication that the target cell may not be associated to the source gNodeB).

In one option, the handover command includes an indication whether to transmit the indication (e.g., RRC Reconfiguration) the UE receives. For example, the handover command may indicate that the UE needs to transmit the first indication to the target cell upon handover.

In one option, the indication is always transmitted by the UE after a handover occurs, irrespective of whether the handover is an inter-gNodeB handover or intra-gNodeB handover.

The indication may include information if an event (in PLMN-B) has occurred (and/or if an event is ongoing). The indication may be transmitted to the second cell associated to the second gNodeB (target gNodeB).

The pattern preference indication may also be used to indicate that the UE no longer prefers any pattern. This indication may be transmitted, e.g., when the UE is not registered in PLMN-B; not operating as a MULTI-SIM UE; or has some considerable period of inactivity in PLMN-B. In one option, the pattern preference is defined by an RRC IE with no fields therein, which indicates no UE preference. In one option, an explicit field is included in RRC for the UE to indicate that it does not prefer any pattern.

In some embodiments, at least one of the indications transmitted from the UE to the target gNodeB (after the handover) is included in an RRC Reconfiguration Complete message, e.g., a pattern preference for performing a set of IDLE/INACTIVE mode procedures in the second PLMN (possibly updated according the time domain properties of the target cell of target gNodeB in the first PLMN).

In some embodiments, the UE indicates the availability of the pattern preference in the RRC Reconfiguration Complete and receives from the network a request to transmit the pattern, then the UE transmits the pattern, e.g., within a UE Assistance Information message.

In some embodiments, at least one of the indications transmitted from the UE to the target gNodeB (after the handover) is transmitted in a UE Assistance Information message, e.g., including a pattern preference for performing a set of IDLE/INACTIVE mode procedures in the second PLMN (possibly updated according the time domain properties of the target cell of target gNodeB in the first PLMN).

In some embodiments, at least one of the indications transmitted from the UE to the target gNodeB (after the handover), e.g., a pattern preference for performing a set of IDLE/INACTIVE mode procedures in the second PLMN, is transmitted under the following conditions. If reconfigurationWithSync was included in spCellConfig of an MCG or SCG, and when MAC of an NR cell group successfully completes a Random Access procedure triggered (in the handover to the target), and if reconfigurationWithSync was included in masterCellGroup or secondaryCellGroup; and if the UE transmitted indication (e.g., UEAssistanceInformation message including the first, second, third or fourth indication, like a periodic pattern for performing a set of IDLE/INACTIVE mode procedures in the second PLMN) for the corresponding cell group during the last 1 second, and the UE is still configured to provide the concerned indication for the corresponding cell group, then the UE may perform the following operations.

The UE may initiate transmission of at least one of the indications, for example, in the UE Assistance Information message, for the corresponding cell group. The UE starts or restarts the prohibit timer (if it exists) associated with the concerned at least one indication, e.g., to be included in UE assistance information with the timer value set to the value in corresponding configuration. Below is an example of a standard specification, according to some embodiments.

### 5.3.5.3 Reception of an RRCReconfiguration by the UE

The UE shall perform the following actions upon reception of the *RRCReconfiguration,* or upon execution of the conditional reconfiguration (CHO or CPC):
[...]
1>if *reconfigurationWithSync* was included in *spCellConfig* of an MCG or SCG, and when MAC of an NR cell group successfully completes a Random Access procedure triggered above:
   [...]
   2>if *reconfigurationWithSync* was included in *masterCellGroup* or *secondaryCellGroup;* and
   2>if the UE transmitted a *UEAssistanceInformation* message (including multi-SIM gap information) for the corresponding cell group during the last 1 second, and the UE is still configured to provide the concerned UE assistance information for the corresponding cell group:
      3>initiate transmission of a *UEAssistanceInformation* message (including multi-SIM gap information) for the corresponding cell group in accordance with clause 5.7.4.3 to provide the concerned UE assistance information;
      3> start or restart the prohibit timer (if exists) associated with the concerned UE assistance information with the timer value set to the value in corresponding configuration;

In some embodiments, the UE includes in the RRC Reconfiguration Complete message transmitted to the target cell of the target gNodeB an indication that the UE has available information regarding gaps related to multi-SIM operation, i.e., related to procedures (like idle/inactive procedures) in PLMN-B. Based on the availability indication, the target gNodeB may request the UE to report an indication and/or a pattern preference for performing a set of IDLE/INACTIVE mode procedures in the second PLMN. An example is illustrated in FIGURE 11.

FIGURE 11 is another flow diagram illustrating an example multi-SIM UE handover procedure according to embodiments A1. As illustrated, the UE transmits the information associated to the required gaps for performing idle/inactive procedures in the second PLMN upon handover.

In some embodiments, while the UE is connected to the first PLMN (e.g., in RRC_CONNECTED) and performing idle/inactive procedures in the second PLMN, the UE monitors the quality of the serving cell (e.g., PCell) the UE is connected to in the first PLMN. If the quality of the serving cell (e.g., PCell) becomes worse than a threshold (e.g., PCell RSRP below a configured threshold) and/or an RLF timer is running (e.g., T311, timer T310), and/or the UE has transmitted a measurement report, the UE shall prioritize listening to messages from the first PLMN instead of performing the procedures in the second PLMN. That is done so an RLF is avoided with the first PLMN and/or, if it happens, it is recovered as fast as possible.

At the network side, as the UE is indicating to the target gNodeB the multi-SIM related information (e.g., upon handovers) the first gNodeB (operating as a source gNodeB in the handover) does not need to perform further actions.

Another group of UE-based solutions (Embodiments A2) includes a method performed by a wireless terminal (also referred to as a UE) capable of operating with multiple USIMs (at least two). The method comprises receiving a measurement configuration from a first gNodeB for performing measurements, e.g., a measConfig field of IE MeasConfigNR including at least one reporting configuration (reportConfig field of IE ReportConfigNR) with an event triggered report type such as an A3 and/or A5 event configuration (as defined in TS 38.331).

The method further comprises determining that the entry condition of an event is fulfilled and determining a neighbors cell is a triggered cell, e.g., if the neighbor cell fulfills the entry condition of an event like A3 and/or A5, indicating that this may be a good candidate neighbor cell to be a target for a handover. If the UE is in CONNECTED in a first PLMN (associated with the first USIM) and is connected to a first cell associated to a first gNodeB and in IDLE/INACTIVE in a second PLMN (associated with the second USIM), the method comprises determining a pattern preference for performing a set of IDLE/INACTIVE mode procedures in the second PLMN. In some embodiments, the action is performed if configured by the first gNodeB, which may be indicated in the measurement configuration, e.g., as part of the reporting configuration and/or the measurement identifier configuration and/or the measurement object.

The method further comprises transmitting a measurement report associated to the triggered event (e.g., A3 event triggering a measurement report) and including in the measurement report an indication with information on the pattern preference to the first PLMN. The indication is transmitted to the first cell associated to the first gNodeB.

The first gNodeB, which is the source gNodeB, may determine to handover the UE to a target cell in a target gNodeB (second gNodeB). The source gNodeB sends to the target gNodeB in a Handover Request message (or equivalent) information from the measurement report, such as the indication and/or information derived from it and/or the pattern preference for performing a set of IDLE/INACTIVE mode procedures in the second PLMN.

The second gNodeB (target gNodeB) receives the indication and/or information derived from it and/or the pattern preference for performing a set of IDLE/INACTIVE mode procedures in the second PLMN, and determines a gap configuration (measurement gap configuration, within a measConfig of IE MeasConfigNR). The gap configuration is included in the RRC container with the target cell RRC configuration to be used upon the handover. The first gNodeB (source gNodeB) receives the RRC configuration for the target cell including the gap configuration and provides it to the UE.

In some embodiments, the UE derives the indication per triggered cell included in the measurement report, because the indication (e.g., periodic pattern) may depend on the time domain information of the triggered cell, such as an offset to a given frame number, etc.

The method further comprises receiving a handover command (e.g., RRC Reconfiguration including a reconfiguration with sync) including a gap configuration (e.g., a measurement gap configuration within measConfig of IE MeasConfigNR where the gap configuration is based on the indication the target gNodeB has received), providing the UE gaps for the UE to perform idle and/or inactive procedures in the second PLMN.

The method further comprises performing a handover to the target cell of the target gNodeB (Second gNodeB), i.e., performing random access and transmitting an RRC Reconfiguration Complete and monitoring the second PLMN according to the gap configuration provided in the handover command. An example is illustrated in FIGURE 12.

FIGURE 12 is another flow diagram illustrating an example multi-SIM UE handover procedure according to embodiments A2. As illustrated, the pattern preference for performing a set of IDLE/INACTIVE mode procedures in the second PLMN are shared between the UE and gNodeB via measurement reports and measurement configurations.

Some embodiments include network-based solutions (Embodiments B1). Some embodiments include a method performed by a first network node (also referred to as a gNodeB) connected to a UE operating with multiple USIMs (at least two). The method comprises receiving an indication with information on a pattern preference to the first PLMN. The indication is received in a first cell associated to a first gNodeB.

The method further comprises storing the indication and information associated in the UE AS context.

The method further comprises determining to perform a handover to a second cell associated to a second gNodeB and transmitting to the second gNodeB a message (e.g., Handover Request message) including at least one of the following: (a) an indication and/or information derived from an indication, such as a measurement configuration (e.g., gap configuration) with which the first gNodeB has configured the UE; (b) the UE AS Context, including an indication(s); and/or (c) the UE AS Context, including information derived from the indication(s), such as measurement gap and/or a gap configuration (e.g., a DRX configuration).

The first gNodeB, which is the source gNodeB, may determine to handover the UE to a target cell in a target gNodeB (second gNodeB). The source gNodeB sends to the target gNodeB in a Handover Request message (or equivalent) the AS context that includes an indication and/or information derived from it and/or the pattern preference for performing a set of IDLE/INACTIVE mode procedures in the second PLMN.

The second gNodeB (target gNodeB) receives the indication and/or information derived from it and/or the pattern preference for performing a set of IDLE/INACTIVE mode procedures in the second PLMN, and determines a gap configuration (measurement gap configuration, within a measConfig of IE MeasConfigNR). The gap configuration is included in the RRC container with the target cell RRC configuration to be used upon the handover. The first gNodeB (source gNodeB) receives the RRC configuration for the target cell including the gap configuration and provides it to the UE.

The method further comprises receiving from the second gNodeB a message acknowledging the handover (e.g. Handover Request Acknowledgement message). The message includes an RRCReconfiguration generated by the target that includes a measurement gap configuration.

The method further comprises transmitting to the UE a handover command (e.g., RRC Reconfiguration including a reconfiguration with synchronization) including a gap configuration (e.g., a measurement gap configuration within measConfig of IE MeasConfigNR where the gap configuration is based on the indication the target gNodeB has received), providing the UE gaps for the UE to perform idle and/or inactive procedures in the second PLMN.

The UE performs the handover to the target cell of the target gNodeB (Second gNodeB), i.e., performing random access and transmitting an RRC Reconfiguration Complete. The UE monitors the second PLMN according to the gap configuration provided in the handover command. The target gNodeB schedules the UE according to the gap configuration provided in the handover command. An example is illustrated in FIGURE 13.

FIGURE 13 is another flow diagram illustrating an example multi-SIM UE handover procedure according to embodiments B1. As illustrated, the pattern preference for performing a set of IDLE/INACTIVE mode procedures in the second PLMN are stored in a UE AS context.

Some embodiments include a core network-based solution (Embodiments C1). Some embodiments include a method performed by a first network node (also referred to as a gNodeB, operating as source gNodeB in a handover) connected to a UE operating with multiple USIMs (at least two). The method comprises receiving from the UE an indication with information on the periodic pattern to the first PLMN. The indication is transmitted to a first cell associated to a first gNodeB. The received indication may be in a NAS message included in an RRC message the UE has transmitted to the first network node (the gNodeB).

The method further comprises transmitting the indication to a Core Network node such as the AMF. Upon reception of the indication, the AMF stores the indication and is aware of the periodic pattern the UE requires for performing actions at the second PLMN. In some embodiments, the information may be stored in another network node, possibly centralized, where the information may be later retrieved.

The method further comprises determining to perform a handover and transmitting a Handover Request to a second network node e.g. target gNodeB.

The method further comprises receiving a Handover Request Ack from the second network node, e.g. target gNodeB, including a handover command (i.e., an RRCReconfiguration, including a reconfiguration with sync) prepared by the target gNodeB, and transmitting the handover command to the UE.

In another group of core network-based solutions (Embodiments C2), some embodiments include a method performed by a second network node (also referred to as a gNodeB, operating as target gNodeB in a handover). The method comprises receiving a Handover Request from a first network node, e.g. source gNodeB. In some embodiments, the second network node determines to accept the handover.

In some embodiments, the target network node determines that the UE is capable of multi-SIM communication. The determination may be based on information the source gNodeB has provided to the target gNodeB. The determination may also indicate that the UE may require gaps for performing actions towards the second PLMN, and/or that the UE is currently performing actions with the second PLMN and/or that the UE is currently registered to the second PLMN.

The method further comprises transmitting a Handover Request Ack to the first network node, e.g. source gNodeB, including a handover command (i.e., an RRCReconfiguration, including a reconfiguration with sync) prepared by the target gNodeB and receiving a message from a core network node, such as an AMF. The message includes an indication based on the pattern preference the UE requires as gap for performing procedures at the second PLMN (e.g., idle/inactive procedure such as cell reselection measurements, acquisition of system information, monitoring of paging occasions, etc.). In some embodiments, the message is a Path Switch Request Ack.

The method further comprises scheduling the UE based on the information received from the core network node. In some embodiments, based on the information from the core network node, e.g., from the AMF, the second network node sends to the UE an RRCReconfiguration including a gap re-configuration (e.g., an updated measurement gap configuration) with idle periods so the UE can perform the actions towards the second PLMN. An example is illustrated in FIGURE 14.

FIGURE 14 is another flow diagram illustrating an example multi-SIM UE handover procedure according to embodiments C1 and C2. As illustrated, the target gNodeB receives an indication based on the pattern preferences the UE requires as gaps for performing procedures at the second PLMN (e.g., idle/inactive procedure such as cell reselection measurements, acquisition of system information, monitoring of paging occasions, etc.) from the core network.

Some embodiments include aspects related to the Centralized Unit (CU)/Distributed Unit (DU) split architecture. If the message the UE transmits to indicate the periodic pattern for idle/inactive mode procedures in the second PLMN is an RRC message, received at the CU (where RRC terminates, e.g., a Control Plane (CP)-CU), the CU communicates the gap information/configuration to the DU that is responsible for scheduling the UE. In the mobility procedures disclosed in the embodiments above, the target gNodeB may comprise a CU and DU. In that sense, when the target CU receives from the source CU the AS context including the gap information, it configures the target DU with the gap configuration.

FIGURE 15 illustrates an example wireless network, according to certain embodiments. The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 160 and WD 110 comprise various components described in more detail below. These components work together to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network.

Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations.

A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs.

As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In FIGURE 15, network node 160 includes processing circuitry 170, device readable medium 180, interface 190, auxiliary equipment 184, power source 186, power circuitry 187, and antenna 162. Although network node 160 illustrated in the example wireless network of FIGURE 15 may represent a device that includes the illustrated combination of hardware components, other embodiments may comprise network nodes with different combinations of components.

It is to be understood that a network node comprises any suitable combination of hardware and/or software needed to perform the tasks, features, functions and methods disclosed herein. Moreover, while the components of network node 160 are depicted as single boxes located within a larger box, or nested within multiple boxes, in practice, a network node may comprise multiple different physical components that make up a single illustrated component (e.g., device readable medium 180 may comprise multiple separate hard drives as well as multiple RAM modules).

Similarly, network node 160 may be composed of multiple physically separate components (e.g., a NodeB component and a RNC component, or a BTS component and a BSC component, etc.), which may each have their own respective components. In certain scenarios in which network node 160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node.

In some embodiments, network node 160 may be configured to support multiple radio access technologies (RATs). In such embodiments, some components may be duplicated (e.g., separate device readable medium 180 for the different RATs) and some components may be reused (e.g., the same antenna 162 may be shared by the RATs). Network node 160 may also include multiple sets of the various illustrated components for different wireless technologies integrated into network node 160, such as, for example, GSM, WCDMA, LTE, NR, WiFi, or Bluetooth wireless technologies. These wireless technologies may be integrated into the same or different chip or set of chips and other components within network node 160.

Processing circuitry 170 is configured to perform any determining, calculating, or similar operations (e.g., certain obtaining operations) described herein as being provided by a network node. These operations performed by processing circuitry 170 may include processing information obtained by processing circuitry 170 by, for example, converting the obtained information into other information, comparing the obtained information or converted information to information stored in the network node, and/or performing one or more operations based on the obtained information or converted information, and as a result of said processing making a determination.

Processing circuitry 170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 160 components, such as device readable medium 180, network node 160 functionality.

For example, processing circuitry 170 may execute instructions stored in device readable medium 180 or in memory within processing circuitry 170. Such functionality may include providing any of the various wireless features, functions, or benefits discussed herein. In some embodiments, processing circuitry 170 may include a system on a chip (SOC).

In some embodiments, processing circuitry 170 may include one or more of radio frequency (RF) transceiver circuitry 172 and baseband processing circuitry 174. In some embodiments, radio frequency (RF) transceiver circuitry 172 and baseband processing circuitry 174 may be on separate chips (or sets of chips), boards, or units, such as radio units and digital units. In alternative embodiments, part or all of RF transceiver circuitry 172 and baseband processing circuitry 174 may be on the same chip or set of chips, boards, or units

In certain embodiments, some or all of the functionality described herein as being provided by a network node, base station, eNB or other such network device may be performed by processing circuitry 170 executing instructions stored on device readable medium 180 or memory within processing circuitry 170. In alternative embodiments, some or all of the functionality may be provided by processing circuitry 170 without executing instructions stored on a separate or discrete device readable medium, such as in a hard-wired manner. In any of those embodiments, whether executing instructions stored on a device readable storage medium or not, processing circuitry 170 can be configured to perform the described functionality. The benefits provided by such functionality are not limited to processing circuitry 170 alone or to other components of network node 160 but are enjoyed by network node 160 as a whole, and/or by end users and the wireless network generally.

Device readable medium 180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 170. Device readable medium 180 may store any suitable instructions, data or information, including a computer program, software, an application including one or more of logic, rules, code, tables, etc. and/or other instructions capable of being executed by processing circuitry 170 and, utilized by network node 160. Device readable medium 180 may be used to store any calculations made by processing circuitry 170 and/or any data received via interface 190. In some embodiments, processing circuitry 170 and device readable medium 180 may be considered to be integrated.

Interface 190 is used in the wired or wireless communication of signaling and/or data between network node 160, network 106, and/or WDs 110. As illustrated, interface 190 comprises port(s)/terminal(s) 194 to send and receive data, for example to and from network 106 over a wired connection. Interface 190 also includes radio front end circuitry 192 that may be coupled to, or in certain embodiments a part of, antenna 162.

Radio front end circuitry 192 comprises filters 198 and amplifiers 196. Radio front end circuitry 192 may be connected to antenna 162 and processing circuitry 170. Radio front end circuitry may be configured to condition signals communicated between antenna 162 and processing circuitry 170. Radio front end circuitry 192 may receive digital data that is to be sent out to other network nodes or WDs via a wireless connection. Radio front end circuitry 192 may convert the digital data into a radio signal having the appropriate channel and bandwidth parameters using a combination of filters 198 and/or amplifiers 196. The radio signal may then be transmitted via antenna 162. Similarly, when receiving data, antenna 162 may collect radio signals which are then converted into digital data by radio front end circuitry 192. The digital data may be passed to processing circuitry 170. In other embodiments, the interface may comprise different components and/or different combinations of components.

In certain alternative embodiments, network node 160 may not include separate radio front end circuitry 192, instead, processing circuitry 170 may comprise radio front end circuitry and may be connected to antenna 162 without separate radio front end circuitry 192. Similarly, in some embodiments, all or some of RF transceiver circuitry 172 may be considered a part of interface 190. In still other embodiments, interface 190 may include one or more ports or terminals 194, radio front end circuitry 192, and RF transceiver circuitry 172, as part of a radio unit (not shown), and interface 190 may communicate with baseband processing circuitry 174, which is part of a digital unit (not shown).

Antenna 162 may include one or more antennas, or antenna arrays, configured to send and/or receive wireless signals. Antenna 162 may be coupled to radio front end circuitry 190 and may be any type of antenna capable of transmitting and receiving data and/or signals wirelessly. In some embodiments, antenna 162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 162 may be separate from network node 160 and may be connectable to network node 160 through an interface or port.

Antenna 162, interface 190, and/or processing circuitry 170 may be configured to perform any receiving operations and/or certain obtaining operations described herein as being performed by a network node. Any information, data and/or signals may be received from a wireless device, another network node and/or any other network equipment. Similarly, antenna 162, interface 190, and/or processing circuitry 170 may be configured to perform any transmitting operations described herein as being performed by a network node. Any information, data and/or signals may be transmitted to a wireless device, another network node and/or any other network equipment.

Power circuitry 187 may comprise, or be coupled to, power management circuitry and is configured to supply the components of network node 160 with power for performing the functionality described herein. Power circuitry 187 may receive power from power source 186. Power source 186 and/or power circuitry 187 may be configured to provide power to the various components of network node 160 in a form suitable for the respective components (e.g., at a voltage and current level needed for each respective component). Power source 186 may either be included in, or external to, power circuitry 187 and/or network node 160.

For example, network node 160 may be connectable to an external power source (e.g., an electricity outlet) via an input circuitry or interface such as an electrical cable, whereby the external power source supplies power to power circuitry 187. As a further example, power source 186 may comprise a source of power in the form of a battery or battery pack which is connected to, or integrated in, power circuitry 187. The battery may provide backup power should the external power source fail. Other types of power sources, such as photovoltaic devices, may also be used.

Alternative embodiments of network node 160 may include additional components beyond those shown in FIGURE 15 that may be responsible for providing certain aspects of the network node's functionality, including any of the functionality described herein and/or any functionality necessary to support the subject matter described herein. For example, network node 160 may include user interface equipment to allow input of information into network node 160 and to allow output of information from network node 160. This may allow a user to perform diagnostic, maintenance, repair, and other administrative functions for network node 160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air.

In some embodiments, a WD may be configured to transmit and/or receive information without direct human interaction. For instance, a WD may be designed to transmit information to a network on a predetermined schedule, when triggered by an internal or external event, or in response to requests from the network.

Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device.

As yet another specific example, in an Internet of Things (IoT) scenario, a WD may represent a machine or other device that performs monitoring and/or measurements and transmits the results of such monitoring and/or measurements to another WD and/or a network node. The WD may in this case be a machine-to-machine (M2M) device, which may in a 3GPP context be referred to as an MTC device. As one example, the WD may be a UE implementing the 3GPP narrow band internet of things (NB-IoT) standard. Examples of such machines or devices are sensors, metering devices such as power meters, industrial machinery, or home or personal appliances (e.g. refrigerators, televisions, etc.) personal wearables (e.g., watches, fitness trackers, etc.).

In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 110 includes antenna 111, interface 114, processing circuitry 120, device readable medium 130, user interface equipment 132, auxiliary equipment 134, power source 136 and power circuitry 137. WD 110 may include multiple sets of one or more of the illustrated components for different wireless technologies supported by WD 110, such as, for example, GSM, WCDMA, LTE, NR, WiFi, WiMAX, or Bluetooth wireless technologies, just to mention a few. These wireless technologies may be integrated into the same or different chips or set of chips as other components within WD 110.

Antenna 111 may include one or more antennas or antenna arrays, configured to send and/or receive wireless signals, and is connected to interface 114. In certain alternative embodiments, antenna 111 may be separate from WD 110 and be connectable to WD 110 through an interface or port. Antenna 111, interface 114, and/or processing circuitry 120 may be configured to perform any receiving or transmitting operations described herein as being performed by a WD. Any information, data and/or signals may be received from a network node and/or another WD. In some embodiments, radio front end circuitry and/or antenna 111 may be considered an interface.

As illustrated, interface 114 comprises radio front end circuitry 112 and antenna 111. Radio front end circuitry 112 comprise one or more filters 118 and amplifiers 116. Radio front end circuitry 114 is connected to antenna 111 and processing circuitry 120 and is configured to condition signals communicated between antenna 111 and processing circuitry 120. Radio front end circuitry 112 may be coupled to or a part of antenna 111. In some embodiments, WD 110 may not include separate radio front end circuitry 112; rather, processing circuitry 120 may comprise radio front end circuitry and may be connected to antenna 111. Similarly, in some embodiments, some or all of RF transceiver circuitry 122 may be considered a part of interface 114.

Radio front end circuitry 112 may receive digital data that is to be sent out to other network nodes or WDs via a wireless connection. Radio front end circuitry 112 may convert the digital data into a radio signal having the appropriate channel and bandwidth parameters using a combination of filters 118 and/or amplifiers 116. The radio signal may then be transmitted via antenna 111. Similarly, when receiving data, antenna 111 may collect radio signals which are then converted into digital data by radio front end circuitry 112. The digital data may be passed to processing circuitry 120. In other embodiments, the interface may comprise different components and/or different combinations of components.

Processing circuitry 120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 110 components, such as device readable medium 130, WD 110 functionality. Such functionality may include providing any of the various wireless features or benefits discussed herein. For example, processing circuitry 120 may execute instructions stored in device readable medium 130 or in memory within processing circuitry 120 to provide the functionality disclosed herein.

As illustrated, processing circuitry 120 includes one or more of RF transceiver circuitry 122, baseband processing circuitry 124, and application processing circuitry 126. In other embodiments, the processing circuitry may comprise different components and/or different combinations of components. In certain embodiments processing circuitry 120 of WD 110 may comprise a SOC. In some embodiments, RF transceiver circuitry 122, baseband processing circuitry 124, and application processing circuitry 126 may be on separate chips or sets of chips.

In alternative embodiments, part or all of baseband processing circuitry 124 and application processing circuitry 126 may be combined into one chip or set of chips, and RF transceiver circuitry 122 may be on a separate chip or set of chips. In still alternative embodiments, part or all of RF transceiver circuitry 122 and baseband processing circuitry 124 may be on the same chip or set of chips, and application processing circuitry 126 may be on a separate chip or set of chips. In yet other alternative embodiments, part or all of RF transceiver circuitry 122, baseband processing circuitry 124, and application processing circuitry 126 may be combined in the same chip or set of chips. In some embodiments, RF transceiver circuitry 122 may be a part of interface 114. RF transceiver circuitry 122 may condition RF signals for processing circuitry 120.

In certain embodiments, some or all of the functionality described herein as being performed by a WD may be provided by processing circuitry 120 executing instructions stored on device readable medium 130, which in certain embodiments may be a computer-readable storage medium. In alternative embodiments, some or all of the functionality may be provided by processing circuitry 120 without executing instructions stored on a separate or discrete device readable storage medium, such as in a hard-wired manner.

In any of those embodiments, whether executing instructions stored on a device readable storage medium or not, processing circuitry 120 can be configured to perform the described functionality. The benefits provided by such functionality are not limited to processing circuitry 120 alone or to other components of WD 110, but are enjoyed by WD 110, and/or by end users and the wireless network generally.

Processing circuitry 120 may be configured to perform any determining, calculating, or similar operations (e.g., certain obtaining operations) described herein as being performed by a WD. These operations, as performed by processing circuitry 120, may include processing information obtained by processing circuitry 120 by, for example, converting the obtained information into other information, comparing the obtained information or converted information to information stored by WD 110, and/or performing one or more operations based on the obtained information or converted information, and as a result of said processing making a determination

Device readable medium 130 may be operable to store a computer program, software, an application including one or more of logic, rules, code, tables, etc. and/or other instructions capable of being executed by processing circuitry 120. Device readable medium 130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 120. In some embodiments, processing circuitry 120 and device readable medium 130 may be integrated.

User interface equipment 132 may provide components that allow for a human user to interact with WD 110. Such interaction may be of many forms, such as visual, audial, tactile, etc. User interface equipment 132 may be operable to produce output to the user and to allow the user to provide input to WD 110. The type of interaction may vary depending on the type of user interface equipment 132 installed in WD 110. For example, if WD 110 is a smart phone, the interaction may be via a touch screen; if WD 110 is a smart meter, the interaction may be through a screen that provides usage (e.g., the number of gallons used) or a speaker that provides an audible alert (e.g., if smoke is detected).

User interface equipment 132 may include input interfaces, devices and circuits, and output interfaces, devices and circuits. User interface equipment 132 is configured to allow input of information into WD 110 and is connected to processing circuitry 120 to allow processing circuitry 120 to process the input information. User interface equipment 132 may include, for example, a microphone, a proximity or other sensor, keys/buttons, a touch display, one or more cameras, a USB port, or other input circuitry. User interface equipment 132 is also configured to allow output of information from WD 110, and to allow processing circuitry 120 to output information from WD 110. User interface equipment 132 may include, for example, a speaker, a display, vibrating circuitry, a USB port, a headphone interface, or other output circuitry. Using one or more input and output interfaces, devices, and circuits, of user interface equipment 132, WD 110 may communicate with end users and/or the wireless network and allow them to benefit from the functionality described herein.

Auxiliary equipment 134 is operable to provide more specific functionality which may not be generally performed by WDs. This may comprise specialized sensors for doing measurements for various purposes, interfaces for additional types of communication such as wired communications etc. The inclusion and type of components of auxiliary equipment 134 may vary depending on the embodiment and/or scenario.

Power source 136 may, in some embodiments, be in the form of a battery or battery pack. Other types of power sources, such as an external power source (e.g., an electricity outlet), photovoltaic devices or power cells, may also be used. WD 110 may further comprise power circuitry 137 for delivering power from power source 136 to the various parts of WD 110 which need power from power source 136 to carry out any functionality described or indicated herein. Power circuitry 137 may in certain embodiments comprise power management circuitry.

Power circuitry 137 may additionally or alternatively be operable to receive power from an external power source; in which case WD 110 may be connectable to the external power source (such as an electricity outlet) via input circuitry or an interface such as an electrical power cable. Power circuitry 137 may also in certain embodiments be operable to deliver power from an external power source to power source 136. This may be, for example, for the charging of power source 136. Power circuitry 137 may perform any formatting, converting, or other modification to the power from power source 136 to make the power suitable for the respective components of WD 110 to which power is supplied.

Although the subject matter described herein may be implemented in any appropriate type of system using any suitable components, the embodiments disclosed herein are described in relation to a wireless network, such as the example wireless network illustrated in FIGURE 15. For simplicity, the wireless network of FIGURE 15 only depicts network 106, network nodes 160 and 160b, and WDs 110, 110b, and 110c. In practice, a wireless network may further include any additional elements suitable to support communication between wireless devices or between a wireless device and another communication device, such as a landline telephone, a service provider, or any other network node or end device. Of the illustrated components, network node 160 and wireless device (WD) 110 are depicted with additional detail. The wireless network may provide communication and other types of services to one or more wireless devices to facilitate the wireless devices' access to and/or use of the services provided by, or via, the wireless network.

FIGURE 16 illustrates an example user equipment, according to certain embodiments. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 200 may be any UE identified by the 3^{rd} Generation Partnership Project (3GPP), including a NB-IoT UE, a machine type communication (MTC) UE, and/or an enhanced MTC (eMTC) UE. UE 200, as illustrated in FIGURE 16, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although FIGURE 16 is a UE, the components discussed herein are equally applicable to a WD, and vice-versa.

In FIGURE 16, UE 200 includes processing circuitry 201 that is operatively coupled to input/output interface 205, radio frequency (RF) interface 209, network connection interface 211, memory 215 including random access memory (RAM) 217, read-only memory (ROM) 219, and storage medium 221 or the like, communication subsystem 231, power source 233, and/or any other component, or any combination thereof. Storage medium 221 includes operating system 223, application program 225, and data 227. In other embodiments, storage medium 221 may include other similar types of information. Certain UEs may use all the components shown in FIGURE 16, or only a subset of the components. The level of integration between the components may vary from one UE to another UE. Further, certain UEs may contain multiple instances of a component, such as multiple processors, memories, transceivers, transmitters, receivers, etc.

In FIGURE 16, processing circuitry 201 may be configured to process computer instructions and data. Processing circuitry 201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 201 may include two central processing units (CPUs). Data may be information in a form suitable for use by a computer.

In the depicted embodiment, input/output interface 205 may be configured to provide a communication interface to an input device, output device, or input and output device. UE 200 may be configured to use an output device via input/output interface 205.

An output device may use the same type of interface port as an input device. For example, a USB port may be used to provide input to and output from UE 200. The output device may be a speaker, a sound card, a video card, a display, a monitor, a printer, an actuator, an emitter, a smartcard, another output device, or any combination thereof.

UE 200 may be configured to use an input device via input/output interface 205 to allow a user to capture information into UE 200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In FIGURE 16, RF interface 209 may be configured to provide a communication interface to RF components such as a transmitter, a receiver, and an antenna. Network connection interface 211 may be configured to provide a communication interface to network 243a. Network 243a may encompass wired and/or wireless networks such as a local-area network (LAN), a wide-area network (WAN), a computer network, a wireless network, a telecommunications network, another like network or any combination thereof. For example, network 243a may comprise a Wi-Fi network. Network connection interface 211 may be configured to include a receiver and a transmitter interface used to communicate with one or more other devices over a communication network according to one or more communication protocols, such as Ethernet, TCP/IP, SONET, ATM, or the like. Network connection interface 211 may implement receiver and transmitter functionality appropriate to the communication network links (e.g., optical, electrical, and the like). The transmitter and receiver functions may share circuit components, software or firmware, or alternatively may be implemented separately.

RAM 217 may be configured to interface via bus 202 to processing circuitry 201 to provide storage or caching of data or computer instructions during the execution of software programs such as the operating system, application programs, and device drivers. ROM 219 may be configured to provide computer instructions or data to processing circuitry 201. For example, ROM 219 may be configured to store invariant low-level system code or data for basic system functions such as basic input and output (I/O), startup, or reception of keystrokes from a keyboard that are stored in a non-volatile memory.

Storage medium 221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 221 may be configured to include operating system 223, application program 225 such as a web browser application, a widget or gadget engine or another application, and data file 227. Storage medium 221 may store, for use by UE 200, any of a variety of various operating systems or combinations of operating systems.

Storage medium 221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 221 may allow UE 200 to access computer-executable instructions, application programs or the like, stored on transitory or non-transitory memory media, to off-load data, or to upload data. An article of manufacture, such as one utilizing a communication system may be tangibly embodied in storage medium 221, which may comprise a device readable medium.

In FIGURE 16, processing circuitry 201 may be configured to communicate with network 243b using communication subsystem 231. Network 243a and network 243b may be the same network or networks or different network or networks. Communication subsystem 231 may be configured to include one or more transceivers used to communicate with network 243b. For example, communication subsystem 231 may be configured to include one or more transceivers used to communicate with one or more remote transceivers of another device capable of wireless communication such as another WD, UE, or base station of a radio access network (RAN) according to one or more communication protocols, such as IEEE 802.2, CDMA, WCDMA, GSM, LTE, UTRAN, WiMax, or the like. Each transceiver may include transmitter 233 and/or receiver 235 to implement transmitter or receiver functionality, respectively, appropriate to the RAN links (e.g., frequency allocations and the like). Further, transmitter 233 and receiver 235 of each transceiver may share circuit components, software or firmware, or alternatively may be implemented separately.

In the illustrated embodiment, the communication functions of communication subsystem 231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 231 may include cellular communication, Wi-Fi communication, Bluetooth communication, and GPS communication. Network 243b may encompass wired and/or wireless networks such as a local-area network (LAN), a wide-area network (WAN), a computer network, a wireless network, a telecommunications network, another like network or any combination thereof. For example, network 243b may be a cellular network, a Wi-Fi network, and/or a near-field network. Power source 213 may be configured to provide alternating current (AC) or direct current (DC) power to components of UE 200.

The features, benefits and/or functions described herein may be implemented in one of the components of UE 200 or partitioned across multiple components of UE 200. Further, the features, benefits, and/or functions described herein may be implemented in any combination of hardware, software or firmware. In one example, communication subsystem 231 may be configured to include any of the components described herein. Further, processing circuitry 201 may be configured to communicate with any of such components over bus 202. In another example, any of such components may be represented by program instructions stored in memory that when executed by processing circuitry 201 perform the corresponding functions described herein. In another example, the functionality of any of such components may be partitioned between processing circuitry 201 and communication subsystem 231. In another example, the non-computationally intensive functions of any of such components may be implemented in software or firmware and the computationally intensive functions may be implemented in hardware.

FIGURE 17A is a flowchart illustrating an example method in a wireless device, according to certain embodiments. In particular embodiments, one or more steps of FIGURE 17A may be performed by wireless device 110 described with respect to FIGURE 15.

The wireless device is operating in a first network and a second network. The wireless device is in a power saving mode in the second network.

The method begins at step 1712, where the wireless device (e.g., wireless device 110) determines a first pattern for performing a set of power saving mode (e.g., idle/inactive) procedures in the second network. In particular embodiments, the pattern is based on one or more of the following procedures in the second network: paging frames and paging occasions configured for the wireless device, discontinuous reception (DRX) cycle, periods for performing measurements, and periodic registration area updates.

In some embodiments, the pattern may comprise any of the patterns described with respect to the embodiments and examples described herein.

At step 1714, the wireless device transmits a first indication of the determined pattern to a first network node of the first network. The first network node may use the pattern to make scheduling decisions for the wireless device so that the first network node does not schedule the wireless device when the wireless device is performing operations in the second network.

At step 1716, the wireless device receives a mobility command to perform a mobility procedure from the first network node to a second network node of the first network. For example, wireless device 110 may receive a handover command to perform a handover to another network node.

At step 1718, the wireless device performs the mobility procedure to the second network node. After connecting to the second network node, it is beneficial if the wireless device can inform the second network node of the wireless device's pattern for performing its set of power saving mode procedures in the second network.

In particular embodiments, the second pattern is the same as the first pattern. In some embodiments, the second network node may have different radio properties than the first network node and the second pattern may be based on the first pattern and a time domain radio property of the second network node.

In some embodiments, the wireless device may continue to step 1724 where the wireless device transmits to the second network node a second indication of a second pattern for performing a set of power saving mode procedures in the second network.

In particular embodiments, transmitting the second indication to the second network node is based on a determination that the first network node and the second network node are the same network node. Transmitting the second indication to the second network node may be based on an indication in the mobility procedure command.

In some embodiments, the wireless device may first notify the network node that a pattern is available and wait for a request before transmitting the indication of the second pattern. This behavior is illustrated in step 1720 where the wireless device transmits an indication to the second network node that an indication of a pattern for performing a set of power saving mode procedures in the second network is available, and in step 1720 where the wireless device receives a request from the second network node to transmit the second indication.

Modifications, additions, or omissions may be made to method 1700 of FIGURE 17A. Additionally, one or more steps in the method of FIGURE 17A may be performed in parallel or in any suitable order.

FIGURE 17B is another flowchart illustrating an example method in a wireless device, according to certain embodiments. In particular embodiments, one or more steps of FIGURE 17B may be performed by wireless device 110 described with respect to FIGURE 15.

The wireless device is operating in a first network and a second network. The wireless device is in a power saving mode in the second network.

The method begins at step 1732, where the wireless device (e.g., wireless device 110) determines a first pattern for performing a set of power saving mode (e.g., idle/inactive) procedures in the second network. In particular embodiments, the pattern is based on one or more of the following procedures in the second network: paging frames and paging occasions configured for the wireless device, discontinuous reception (DRX) cycle, periods for performing measurements, and periodic registration area updates.

In some embodiments, the pattern may comprise any of the patterns described with respect to the embodiments and examples described herein.

At step 1734, the wireless device transmits a first indication of the determined pattern to a first network node of the first network. The first network node may use the pattern to make scheduling decisions for the wireless device so that the first network node does not schedule the wireless device when the wireless device is performing operations in the second network.

In particular embodiments the first indication is transmitted to the first network node via a measurement report. The first indication may be transmitted to the first network node based on an indication in a measurement configuration.

At step 1736, the wireless device receives a mobility command to perform a mobility procedure from the first network node to a second network node of the first network. The mobility procedure command includes a measurement gap configuration for performing a set of power saving mode procedures in the second network. For example, wireless device 110 may receive a handover command to perform a handover to another network node.

In particular embodiments, the measurement gap configuration is based on the first pattern and a time domain radio property of the second network node.

At step 1738, the wireless device performs the mobility procedure to the second network node.

At step 1740, the wireless device monitors the second network according to the measurement gap configuration.

Modifications, additions, or omissions may be made to method 1730 of FIGURE 17B. Additionally, one or more steps in the method of FIGURE 17B may be performed in parallel or in any suitable order.

FIGURE 17C is a flowchart illustrating an example method in a network node, according to certain embodiments. **In** particular embodiments, one or more steps of FIGURE 17C may be performed by network node 160 described with respect to FIGURE 15.

The network node is in a first network serving a first wireless device. The wireless device is in a power saving mode in a second network.

The method begins at step 1752, where the network node (e.g., network node 160) receives, from the wireless device, a first indication of a first pattern for performing a set of power saving mode procedures in the second network. The first pattern is described above with respect to FIGURES 17A and 17B.

At step 1754, the network node determines the wireless device is to perform a mobility procedure to a second network node of the first network. For example, network node 160 may determine that wireless device 110 is better served by another network node 160.

At step 1756, the network node transmits to the second network node a second indication of a second pattern for performing a set of power saving mode procedures in the second network. The second pattern may be the same as the first pattern or may be modified based on the first pattern and a time domain radio property of the second network node.

At step 1758, the network node receives from the second network node a third indication of a third pattern for performing a set of power saving mode procedures in the second network. The third pattern may the same as the first pattern or may be modified based on the first pattern and a time domain radio property of the second network node.

At step 1760, the network node transmits the third indication to the wireless device.

In particular embodiments, transmitting the second indication to the second network node comprises transmitting a mobility command request, receiving the third indication from the second network node comprises receiving mobility command acknowledgement, and transmitting the third indication to the wireless device comprises transmitting a mobility command.

In particular embodiments, transmitting the second indication to the second network node comprises transmitting a measurement configuration, receiving the third indication from the second network node comprises receiving a measurement configuration, and transmitting the third indication to the wireless device comprises transmitting a measurement configuration.

In particular embodiments, the first indication is stored as part of the wireless device access stratum context.

In particular embodiments, one or more of the first indication, the second indication, and the third indication comprise a measurement gap configuration.

Modifications, additions, or omissions may be made to method 1750 of FIGURE 17C. Additionally, one or more steps in the method of FIGURE 17C may be performed in parallel or in any suitable order.

FIGURE 18 illustrates a schematic block diagram of two apparatuses in a wireless network (for example, the wireless network illustrated in FIGURE 15). The apparatuses include a wireless device and a network node (e.g., wireless device 110 and network node 160 illustrated in FIGURE 15). Apparatuses 1600 and 1700 are operable to carry out the example methods described with reference to FIGURES 17A and 17B and FIGURE 17C, respectively, and possibly any other processes or methods disclosed herein. It is also to be understood that the methods of FIGURES 17A and 17B and FIGURE 17C are not necessarily carried out solely by apparatuses 1600 and/or 1700. At least some operations of the methods can be performed by one or more other entities.

Virtual apparatuses 1600 and 1700 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments.

In some implementations, the processing circuitry may be used to cause receiving module 1602, determining module 1604, transmitting module 1606, and any other suitable units of apparatus 1600 to perform corresponding functions according one or more embodiments of the present disclosure. Similarly, the processing circuitry described above may be used to cause receiving module 1702, determining module 1704, transmitting module 1706, and any other suitable units of apparatus 1700 to perform corresponding functions according one or more embodiments of the present disclosure.

As illustrated in FIGURE 18, apparatus 1600 includes receiving module 1602 configured to receive mobility commands, measurements configurations, and monitoring patterns according to any of the embodiments and examples described herein. Determining module 1604 is configured to determine patterns associated with power saving mode operations according to any of the embodiments and examples described herein. Transmitting module 1606 is configured to transmit patterns, measurement reports, and any other control or user data according to any of the embodiments and examples described herein.

As illustrated in FIGURE 18, apparatus 1700 includes receiving module 1702 configured to a receive indications of a pattern for performing a set of power saving mode procedures according to any of the embodiments and examples described herein. Determining module 1704 is configured to determine when to perform mobility procedures and to determine patterns for performing a set of power saving mode procedures according to any of the embodiments and examples described herein. Transmitting module 1706 is configured to transmit indications of a pattern for performing a set of power saving mode procedures according to any of the embodiments and examples described herein.

FIGURE 19 is a schematic block diagram illustrating a virtualization environment 300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 300 hosted by one or more of hardware nodes 330. Further, in embodiments in which the virtual node is not a radio access node or does not require radio connectivity (e.g., a core network node), then the network node may be entirely virtualized.

The functions may be implemented by one or more applications 320 (which may alternatively be called software instances, virtual appliances, network functions, virtual nodes, virtual network functions, etc.) operative to implement some of the features, functions, and/or benefits of some of the embodiments disclosed herein. Applications 320 are run in virtualization environment 300 which provides hardware 330 comprising processing circuitry 360 and memory 390. Memory 390 contains instructions 395 executable by processing circuitry 360 whereby application 320 is operative to provide one or more of the features, benefits, and/or functions disclosed herein.

Virtualization environment 300, comprises general-purpose or special-purpose network hardware devices 330 comprising a set of one or more processors or processing circuitry 360, which may be commercial off-the-shelf (COTS) processors, dedicated Application Specific Integrated Circuits (ASICs), or any other type of processing circuitry including digital or analog hardware components or special purpose processors. Each hardware device may comprise memory 390-1 which may be non-persistent memory for temporarily storing instructions 395 or software executed by processing circuitry 360. Each hardware device may comprise one or more network interface controllers (NICs) 370, also known as network interface cards, which include physical network interface 380. Each hardware device may also include non-transitory, persistent, machine-readable storage media 390-2 having stored therein software 395 and/or instructions executable by processing circuitry 360. Software 395 may include any type of software including software for instantiating one or more virtualization layers 350 (also referred to as hypervisors), software to execute virtual machines 340 as well as software allowing it to execute functions, features and/or benefits described in relation with some embodiments described herein.

Virtual machines 340, comprise virtual processing, virtual memory, virtual networking or interface and virtual storage, and may be run by a corresponding virtualization layer 350 or hypervisor. Different embodiments of the instance of virtual appliance 320 may be implemented on one or more of virtual machines 340, and the implementations may be made in different ways.

During operation, processing circuitry 360 executes software 395 to instantiate the hypervisor or virtualization layer 350, which may sometimes be referred to as a virtual machine monitor (VMM). Virtualization layer 350 may present a virtual operating platform that appears like networking hardware to virtual machine 340.

As shown in FIGURE 19, hardware 330 may be a standalone network node with generic or specific components. Hardware 330 may comprise antenna 3225 and may implement some functions via virtualization. Alternatively, hardware 330 may be part of a larger cluster of hardware (e.g. such as in a data center or customer premise equipment (CPE)) where many hardware nodes work together and are managed via management and orchestration (MANO) 3100, which, among others, oversees lifecycle management of applications 320.

Virtualization of the hardware is in some contexts referred to as network function virtualization (NFV). NFV may be used to consolidate many network equipment types onto industry standard high-volume server hardware, physical switches, and physical storage, which can be located in data centers, and customer premise equipment.

In the context of NFV, virtual machine 340 may be a software implementation of a physical machine that runs programs as if they were executing on a physical, non-virtualized machine. Each of virtual machines 340, and that part of hardware 330 that executes that virtual machine, be it hardware dedicated to that virtual machine and/or hardware shared by that virtual machine with others of the virtual machines 340, forms a separate virtual network elements (VNE).

Still in the context of NFV, Virtual Network Function (VNF) is responsible for handling specific network functions that run in one or more virtual machines 340 on top of hardware networking infrastructure 330 and corresponds to application 320 in FIGURE 20.

In some embodiments, one or more radio units 3200 that each include one or more transmitters 3220 and one or more receivers 3210 may be coupled to one or more antennas 3225. Radio units 3200 may communicate directly with hardware nodes 330 via one or more appropriate network interfaces and may be used in combination with the virtual components to provide a virtual node with radio capabilities, such as a radio access node or a base station.

In some embodiments, some signaling can be effected with the use of control system 3230 which may alternatively be used for communication between the hardware nodes 330 and radio units 3200.

With reference to FIGURE 20, in accordance with an embodiment, a communication system includes telecommunication network 410, such as a 3GPP-type cellular network, which comprises access network 411, such as a radio access network, and core network 414. Access network 411 comprises a plurality of base stations 412a, 412b, 412c, such as NBs, eNBs, gNBs or other types of wireless access points, each defining a corresponding coverage area 413a, 413b, 413c. Each base station 412a, 412b, 412c is connectable to core network 414 over a wired or wireless connection 415. A first UE 491 located in coverage area 413c is configured to wirelessly connect to, or be paged by, the corresponding base station 412c. A second UE 492 in coverage area 413a is wirelessly connectable to the corresponding base station 412a. While a plurality of UEs 491, 492 are illustrated in this example, the disclosed embodiments are equally applicable to a situation where a sole UE is in the coverage area or where a sole UE is connecting to the corresponding base station 412.

Telecommunication network 410 is itself connected to host computer 430, which may be embodied in the hardware and/or software of a standalone server, a cloud-implemented server, a distributed server or as processing resources in a server farm. Host computer 430 may be under the ownership or control of a service provider or may be operated by the service provider or on behalf of the service provider. Connections 421 and 422 between telecommunication network 410 and host computer 430 may extend directly from core network 414 to host computer 430 or may go via an optional intermediate network 420. Intermediate network 420 may be one of, or a combination of more than one of, a public, private or hosted network; intermediate network 420, if any, may be a backbone network or the Internet; in particular, intermediate network 420 may comprise two or more sub-networks (not shown).

The communication system of FIGURE 20 as a whole enables connectivity between the connected UEs 491, 492 and host computer 430. The connectivity may be described as an over-the-top (OTT) connection 450. Host computer 430 and the connected UEs 491, 492 are configured to communicate data and/or signaling via OTT connection 450, using access network 411, core network 414, any intermediate network 420 and possible further infrastructure (not shown) as intermediaries. OTT connection 450 may be transparent in the sense that the participating communication devices through which OTT connection 450 passes are unaware of routing of uplink and downlink communications. For example, base station 412 may not or need not be informed about the past routing of an incoming downlink communication with data originating from host computer 430 to be forwarded (e.g., handed over) to a connected UE 491. Similarly, base station 412 need not be aware of the future routing of an outgoing uplink communication originating from the UE 491 towards the host computer 430.

FIGURE 21 illustrates an example host computer communicating via a base station with a user equipment over a partially wireless connection, according to certain embodiments. Example implementations, in accordance with an embodiment of the UE, base station and host computer discussed in the preceding paragraphs will now be described with reference to FIGURE 21. In communication system 500, host computer 510 comprises hardware 515 including communication interface 516 configured to set up and maintain a wired or wireless connection with an interface of a different communication device of communication system 500. Host computer 510 further comprises processing circuitry 518, which may have storage and/or processing capabilities. In particular, processing circuitry 518 may comprise one or more programmable processors, application-specific integrated circuits, field programmable gate arrays or combinations of these (not shown) adapted to execute instructions. Host computer 510 further comprises software 511, which is stored in or accessible by host computer 510 and executable by processing circuitry 518. Software 511 includes host application 512. Host application 512 may be operable to provide a service to a remote user, such as UE 530 connecting via OTT connection 550 terminating at UE 530 and host computer 510. In providing the service to the remote user, host application 512 may provide user data which is transmitted using OTT connection 550.

Communication system 500 further includes base station 520 provided in a telecommunication system and comprising hardware 525 enabling it to communicate with host computer 510 and with UE 530. Hardware 525 may include communication interface 526 for setting up and maintaining a wired or wireless connection with an interface of a different communication device of communication system 500, as well as radio interface 527 for setting up and maintaining at least wireless connection 570 with UE 530 located in a coverage area (not shown in FIGURE 21) served by base station 520. Communication interface 526 may be configured to facilitate connection 560 to host computer 510. Connection 560 may be direct, or it may pass through a core network (not shown in FIGURE 21) of the telecommunication system and/or through one or more intermediate networks outside the telecommunication system. In the embodiment shown, hardware 525 of base station 520 further includes processing circuitry 528, which may comprise one or more programmable processors, application-specific integrated circuits, field programmable gate arrays or combinations of these (not shown) adapted to execute instructions. Base station 520 further has software 521 stored internally or accessible via an external connection.

Communication system 500 further includes UE 530 already referred to. Its hardware 535 may include radio interface 537 configured to set up and maintain wireless connection 570 with a base station serving a coverage area in which UE 530 is currently located. Hardware 535 of UE 530 further includes processing circuitry 538, which may comprise one or more programmable processors, application-specific integrated circuits, field programmable gate arrays or combinations of these (not shown) adapted to execute instructions. UE 530 further comprises software 531, which is stored in or accessible by UE 530 and executable by processing circuitry 538. Software 531 includes client application 532. Client application 532 may be operable to provide a service to a human or non-human user via UE 530, with the support of host computer 510. In host computer 510, an executing host application 512 may communicate with the executing client application 532 via OTT connection 550 terminating at UE 530 and host computer 510. In providing the service to the user, client application 532 may receive request data from host application 512 and provide user data in response to the request data. OTT connection 550 may transfer both the request data and the user data. Client application 532 may interact with the user to generate the user data that it provides.

It is noted that host computer 510, base station 520 and UE 530 illustrated in FIGURE 21 may be similar or identical to host computer 430, one of base stations 412a, 412b, 412c and one of UEs 491, 492 of FIGURE 20, respectively. This is to say, the inner workings of these entities may be as shown in FIGURE 21 and independently, the surrounding network topology may be that of FIGURE 20.

In FIGURE 21, OTT connection 550 has been drawn abstractly to illustrate the communication between host computer 510 and UE 530 via base station 520, without explicit reference to any intermediary devices and the precise routing of messages via these devices. Network infrastructure may determine the routing, which it may be configured to hide from UE 530 or from the service provider operating host computer 510, or both. While OTT connection 550 is active, the network infrastructure may further take decisions by which it dynamically changes the routing (e.g., based on load balancing consideration or reconfiguration of the network).

Wireless connection 570 between UE 530 and base station 520 is in accordance with the teachings of the embodiments described throughout this disclosure. One or more of the various embodiments improve the performance of OTT services provided to UE 530 using OTT connection 550, in which wireless connection 570 forms the last segment. More precisely, the teachings of these embodiments may improve the signaling overhead and reduce latency, and thereby provide benefits such as reduced user waiting time, better responsiveness and extended battery life.

A measurement procedure may be provided for monitoring data rate, latency and other factors on which the one or more embodiments improve. There may further be an optional network functionality for reconfiguring OTT connection 550 between host computer 510 and UE 530, in response to variations in the measurement results. The measurement procedure and/or the network functionality for reconfiguring OTT connection 550 may be implemented in software 511 and hardware 515 of host computer 510 or in software 531 and hardware 535 of UE 530, or both. In embodiments, sensors (not shown) may be deployed in or in association with communication devices through which OTT connection 550 passes; the sensors may participate in the measurement procedure by supplying values of the monitored quantities exemplified above or supplying values of other physical quantities from which software 511, 531 may compute or estimate the monitored quantities. The reconfiguring of OTT connection 550 may include message format, retransmission settings, preferred routing etc.; the reconfiguring need not affect base station 520, and it may be unknown or imperceptible to base station 520. Such procedures and functionalities may be known and practiced in the art. In certain embodiments, measurements may involve proprietary UE signaling facilitating host computer 510's measurements of throughput, propagation times, latency and the like. The measurements may be implemented in that software 511 and 531 causes messages to be transmitted, in particular empty or 'dummy' messages, using OTT connection 550 while it monitors propagation times, errors etc.

FIGURE 22 is a flowchart illustrating a method implemented in a communication system, in accordance with one embodiment. The communication system includes a host computer, a base station and a UE which may be those described with reference to FIGURES 20 and 21. For simplicity of the present disclosure, only drawing references to FIGURE 22 will be included in this section.

In step 610, the host computer provides user data. In substep 611 (which may be optional) of step 610, the host computer provides the user data by executing a host application. In step 620, the host computer initiates a transmission carrying the user data to the UE. In step 630 (which may be optional), the base station transmits to the UE the user data which was carried in the transmission that the host computer initiated, in accordance with the teachings of the embodiments described throughout this disclosure. In step 640 (which may also be optional), the UE executes a client application associated with the host application executed by the host computer.

FIGURE 23 is a flowchart illustrating a method implemented in a communication system, in accordance with one embodiment. The communication system includes a host computer, a base station and a UE which may be those described with reference to FIGURES 20 and 21. For simplicity of the present disclosure, only drawing references to FIGURE 23 will be included in this section.

In step 710 of the method, the host computer provides user data. In an optional substep (not shown) the host computer provides the user data by executing a host application. In step 720, the host computer initiates a transmission carrying the user data to the UE. The transmission may pass via the base station, in accordance with the teachings of the embodiments described throughout this disclosure. In step 730 (which may be optional), the UE receives the user data carried in the transmission.

FIGURE 24 is a flowchart illustrating a method implemented in a communication system, in accordance with one embodiment. The communication system includes a host computer, a base station and a UE which may be those described with reference to FIGURES 20 and 21. For simplicity of the present disclosure, only drawing references to FIGURE 24 will be included in this section.

In step 810 (which may be optional), the UE receives input data provided by the host computer. Additionally, or alternatively, in step 820, the UE provides user data. In substep 821 (which may be optional) of step 820, the UE provides the user data by executing a client application. In substep 811 (which may be optional) of step 810, the UE executes a client application which provides the user data in reaction to the received input data provided by the host computer. In providing the user data, the executed client application may further consider user input received from the user. Regardless of the specific manner in which the user data was provided, the UE initiates, in substep 830 (which may be optional), transmission of the user data to the host computer. In step 840 of the method, the host computer receives the user data transmitted from the UE, in accordance with the teachings of the embodiments described throughout this disclosure.

FIGURE 25 is a flowchart illustrating a method implemented in a communication system, in accordance with one embodiment. The communication system includes a host computer, a base station and a UE which may be those described with reference to FIGURES 20 and 21. For simplicity of the present disclosure, only drawing references to FIGURE 25 will be included in this section.

In step 910 (which may be optional), in accordance with the teachings of the embodiments described throughout this disclosure, the base station receives user data from the UE. In step 920 (which may be optional), the base station initiates transmission of the received user data to the host computer. In step 930 (which may be optional), the host computer receives the user data carried in the transmission initiated by the base station.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Modifications, additions, or omissions may be made to the systems and apparatuses disclosed herein without departing from the scope of the invention. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

Modifications, additions, or omissions may be made to the methods disclosed herein without departing from the scope of the invention. The methods may include more, fewer, or other steps. Additionally, steps may be performed in any suitable order.

The foregoing description sets forth numerous specific details. It is understood, however, that embodiments may be practiced without these specific details. In other instances, well-known circuits, structures and techniques have not been shown in detail in order not to obscure the understanding of this description. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments, whether or not explicitly described.

Although this disclosure has been described in terms of certain embodiments, alterations and permutations of the embodiments will be apparent to those skilled in the art. Accordingly, the above description of the embodiments does not constrain this disclosure. Other changes, substitutions, and alterations are possible without departing from the scope of this disclosure, as defined by the claims below.

At least some of the following abbreviations may be used in this disclosure. If there is an inconsistency between abbreviations, preference should be given to how it is used above. If listed multiple times below, the first listing should be preferred over any subsequent listing(s).
- 1x RTT: CDMA2000 1x Radio Transmission Technology
- 3GPP: 3rd Generation Partnership Project
- 5G: 5th Generation
- 5GC: 5th Generation Core
- 5G-S-TMSI: temporary identifier used in NR as a replacement of the S-TMSI in LTE
- ABS: Almost Blank Subframe
- AMF: Access Management Function
- ARQ: Automatic Repeat Request
- ASN.1: Abstract Syntax Notation One
- AWGN: Additive White Gaussian Noise
- BCCH: Broadcast Control Channel
- BCH: Broadcast Channel
- BWP: Bandwidth Part
- CA: Carrier Aggregation
- CC: Carrier Component
- CCCH SDU: Common Control Channel SDU
- CDMA: Code Division Multiplexing Access
- CGI: Cell Global Identifier
- CIR: Channel Impulse Response
- CMAS: Commercial Mobile Alert System
- CN: Core Network
- CORESET: Control Resource Set
- CP: Cyclic Prefix
- CPICH: Common Pilot Channel
- CPICH Ec/No: CPICH Received energy per chip divided by the power density in the band
- CRC: Cyclic Redundancy Check
- CQI: Channel Quality information
- C-RNTI: Cell RNTI
- CSI: Channel State Information
- DCCH: Dedicated Control Channel
- DCI: Downlink Control Information
- div: Notation indicating integer division.
- DL: Downlink
- DM: Demodulation
- DMRS: Demodulation Reference Signal
- DRX: Discontinuous Reception
- DTX: Discontinuous Transmission
- DTCH: Dedicated Traffic Channel
- DUT: Device Under Test
- E-CID: Enhanced Cell-ID (positioning method)
- E-SMLC: Evolved-Serving Mobile Location Centre
- ECGI: Evolved CGI
- eNB: E-UTRAN NodeB
- ePDCCH: enhanced Physical Downlink Control Channel
- EPS: Evolved Packet System
- E-SMLC: evolved Serving Mobile Location Center
- E-UTRA: Evolved UTRA
- E-UTRAN: Evolved UTRAN
- ETWS: Earthquake and Tsunami Warning System
- FDD: Frequency Division Duplex
- GERAN: GSM EDGE Radio Access Network
- gNB: Base station in NR
- GNSS: Global Navigation Satellite System
- GSM: Global System for Mobile communication
- HARQ: Hybrid Automatic Repeat Request
- HO: Handover
- HSPA: High Speed Packet Access
- HRPD: High Rate Packet Data
- ID: Identity/Identifier
- IMSI: International Mobile Subscriber Identity
- I-RNTI: Inactive Radio Network Temporary Identifier
- LOS: Line of Sight
- LPP: LTE Positioning Protocol
- LTE: Long-Term Evolution
- MAC: Medium Access Control
- MBMS: Multimedia Broadcast Multicast Services
- MBSFN: Multimedia Broadcast multicast service Single Frequency Network
- MBSFN ABS: MBSFN Almost Blank Subframe
- MDT: Minimization of Drive Tests
- MIB: Master Information Block
- MME: Mobility Management Entity
- mod: modulo
- ms: millisecond
- MSC: Mobile Switching Center
- MSI: Minimum System Information
- NPDCCH: Narrowband Physical Downlink Control Channel
- NAS: Non-Access Stratum
- NGC: Next Generation Core
- NG-RAN: Next Generation RAN
- NPDCCH: Narrowband Physical Downlink Control Channel
- NR: New Radio
- OCNG: OFDMA Channel Noise Generator
- OFDM: Orthogonal Frequency Division Multiplexing
- OFDMA: Orthogonal Frequency Division Multiple Access
- OSS: Operations Support System
- OTDOA: Observed Time Difference of Arrival
- O&M: Operation and Maintenance
- PBCH: Physical Broadcast Channel
- P-CCPCH: Primary Common Control Physical Channel
- PCell: Primary Cell
- PCFICH: Physical Control Format Indicator Channel
- PDCCH: Physical Downlink Control Channel
- PDP: Profile Delay Profile
- PDSCH: Physical Downlink Shared Channel
- PF: Paging Frame
- PGW: Packet Gateway
- PHICH: Physical Hybrid-ARQ Indicator Channel
- PLMN: Public Land Mobile Network
- PMI: Precoder Matrix Indicator
- PO: Paging Occasion
- PRACH: Physical Random Access Channel
- PRB: Physical Resource Block
- P-RNTI: Paging RNTI
- PRS: Positioning Reference Signal
- PSS: Primary Synchronization Signal
- PUCCH: Physical Uplink Control Channel
- PUSCH: Physical Uplink Shared Channel
- RACH: Random Access Channel
- QAM: Quadrature Amplitude Modulation
- RAN: Radio Access Network
- RAT: Radio Access Technology
- RLM: Radio Link Management
- RMSI: Remaining Minimum System Information
- RNA: RAN Notification Area
- RNC: Radio Network Controller
- RNTI: Radio Network Temporary Identifier
- RRC: Radio Resource Control
- RRM: Radio Resource Management
- RS: Reference Signal
- RSCP: Received Signal Code Power
- RSRP: Reference Symbol Received Power OR Reference Signal Received Power
- RSRQ: Reference Signal Received Quality OR Reference Symbol Received Quality
- RSSI: Received Signal Strength Indicator
- RSTD: Reference Signal Time Difference
- SAE: System Architecture Evolution
- SCH: Synchronization Channel
- SCell: Secondary Cell
- SDU: Service Data Unit
- SFN: System Frame Number
- SGW: Serving Gateway
- SI: System Information
- SIB: System Information Block
- SIB1: System Information Block type 1
- SNR: Signal to Noise Ratio
- SON: Self Optimized Network
- SS: Synchronization Signal
- SSS: Secondary Synchronization Signal
- S-TMSI: SAE-TMSI
- TDD: Time Division Duplex
- TMSI: Temporary Mobile Subscriber Identity
- TDOA: Time Difference of Arrival
- TOA: Time of Arrival
- TSS: Tertiary Synchronization Signal
- TS: Technical Specification
- TSG: Technical Specification Group
- TTI: Transmission Time Interval
- UE: User Equipment
- UL: Uplink
- UMTS: Universal Mobile Telecommunication System
- USIM: Universal Subscriber Identity Module
- UTDOA: Uplink Time Difference of Arrival
- UTRA: Universal Terrestrial Radio Access
- UTRAN: Universal Terrestrial Radio Access Network
- WCDMA: Wide CDMA
- WG: Working Group
- WLAN: Wide Local Area Network

## Claims

1. A method performed by a wireless device operating in a first network and a second network, wherein the wireless device is in a power saving mode in the second network, the method comprising:
determining (1732) a first pattern for performing a set of power saving mode procedures in the second network;
transmitting (1734) a first indication of the determined pattern to a first network node of the first network;
receiving (1736), from the first network node, a mobility command to perform a mobility procedure from the first network node to a second network node of the first network, the mobility procedure command including a measurement gap configuration for performing the set of power saving mode procedures in the second network;
performing (1738) the mobility procedure to the second network node; and
monitoring (1740) the second network according to the measurement gap configuration,
wherein the measurement gap configuration is based on the first pattern and a time domain radio property of the second network node, and
wherein the power saving mode corresponds to an idle or inactive state of the wireless device.

2. The method of claim 1, wherein the first indication is transmitted to the first network node via a measurement report.

3. The method of any one of claims 1-2, wherein the first indication is transmitted to the first network node based on an indication in a measurement configuration.

4. The method of any one of claims 1-3, wherein the first pattern is based on one or more of the following procedures in the second network: paging frames and paging occasions configured for the wireless device, discontinuous reception, DRX, cycle, periods for performing measurements, and periodic registration area updates.

5. The method of any one of claims 1-4, wherein the mobility command comprises a handover command; and, optionally,
wherein the mobility procedure comprises a handover procedure from the first network node to the second network node.

6. The method of any one of claims 1-5, wherein the wireless device comprises a multi-SIM wireless device.

7. A wireless device (110) configured to operate in a first network and a second network, wherein the wireless device further configured to operate is in power saving mode in the second network, the wireless device comprising processing circuitry (120) operable to perform the method of any one of claim 1-6.

8. A method performed by a first network node in a first network serving a first wireless device, wherein the wireless device is in a power saving mode in a second network, the method comprising:
receiving (1752), from the wireless device, a first indication of a first pattern for performing a set of power saving mode procedures in the second network;
determining (1754) the wireless device is to perform a mobility procedure to a second network node of the first network;
transmitting (1756) to the second network node a second indication of a second pattern for performing the set of power saving mode procedures in the second network;
receiving (1758) from the second network node a third indication of a third pattern for performing the set of power saving mode procedures in the second network; and
transmitting (1760) the third indication to the wireless device;
wherein transmitting the second indication to the second network node comprises transmitting a mobility command request, and receiving the third indication from the second network node comprises receiving mobility command acknowledgement, and transmitting the third indication to the wireless device comprises transmitting a mobility command; and
wherein the third indication comprises a measurement gap configuration, wherein one or more of the first indication and the second indication comprise a measurement gap configuration, and wherein the second pattern and the third pattern are based on the first pattern and a time domain radio property of the second network node.

9. The method of claim 8, wherein transmitting the second indication to the second network node comprises transmitting a measurement configuration, receiving the third indication from the second network node comprises receiving a measurement configuration, and transmitting the third indication to the wireless device comprises transmitting a measurement configuration.

10. The method of claim 8 or 9, wherein the first indication is stored as part of the wireless device access stratum context.

11. A network node (160) configured to operate in a first network serving a first wireless device, the network node comprising processing circuitry (170) operable to perform the method of any one of claims 8-10.

## Patentansprüche

1. Verfahren, das von einer drahtlosen Vorrichtung durchgeführt wird, die in einem ersten Netzwerk und einem zweiten Netzwerk operiert, wobei die drahtlose Vorrichtung im zweiten Netzwerk in einem Energiesparmodus ist und das Verfahren Folgendes umfasst:
Bestimmen (1732) eines ersten Musters zum Durchführen eines Satzes von Prozeduren im Energiesparmodus im zweiten Netzwerk;
Senden (1734) einer ersten Anzeige des bestimmten Musters an einen ersten Netzwerkknoten des ersten Netzwerks;
Empfangen (1736) eines Mobilitätsbefehls vom ersten Netzwerkknoten, um eine Mobilitätsprozedur vom ersten Netzwerkknoten zu einem zweiten Netzwerkknoten des ersten Netzwerks durchzuführen, wobei der Mobilitätsprozedurbefehl eine Messlückenkonfigurationen zum Durchführen eines Satzes von Prozeduren im Energiesparmodus im zweiten Netzwerk umfasst;
Durchführen (1738) der Mobilitätsprozedur zum zweiten Netzwerkknoten; und
Überwachen (1740) des zweiten Netzwerks gemäß der Messlückenkonfiguration,
wobei die Messlückenkonfiguration auf dem ersten Muster und einer Zeitdomänenfunkeigenschaft des zweiten Netzwerkknotens basiert, und
wobei der Energiesparmodus einem Ruhe- oder Inaktivitätszustand der drahtlosen Vorrichtung entspricht.

2. Verfahren nach Anspruch 1, wobei die erste Anzeige mittels eines Messberichts an den ersten Netzwerkknoten gesendet wird.

3. Verfahren nach Anspruch 1-2, wobei die erste Anzeige basierend auf einer Anzeige in einer Messkonfiguration an den ersten Netzwerkknoten gesendet wird.

4. Netzwerkknoten nach einem der Ansprüche 1-3, wobei das erste Muster auf einer oder mehreren der folgenden Prozeduren im zweiten Netzwerk basiert: Funkrufrahmen und Funkrufgelegenheiten, die für die drahtlose Vorrichtung konfiguriert sind, Zyklen diskontinuierlichen Empfangs, DRX, Perioden zum Durchführen von Messungen und periodischen Aktualisierungen des Registrierungsbereichs.

5. Verfahren nach der Ansprüche 1-4, wobei der Mobilitätsbefehl einen Übergabebefehl umfasst; und optional
wobei die Mobilitätsprozedur eine Übergabeprozedur vom ersten Netzwerkknoten an den zweiten Netzwerkknoten umfasst.

6. Verfahren nach einem der Ansprüche 1-5, wobei die drahtlose Vorrichtung eine drahtlose Multi-SIM-Vorrichtung umfasst.

7. Drahtlose Vorrichtung (110), die dazu konfiguriert ist, in einem ersten Netzwerk und einem zweiten Netzwerk zu operieren, wobei die drahtlose Vorrichtung ferner dazu konfiguriert ist, im zweiten Netzwerk in einem Energiesparmodus zu operieren, wobei die drahtlose Vorrichtung Verarbeitungsschaltungsanordnung (120) umfasst, die zum Durchführen des Verfahrens nach einem der Ansprüche 1-6 ausgelegt ist.

8. Verfahren, das von einem ersten Netzwerkknoten in einem ersten Netzwerk durchgeführt wird, das eine erste drahtlose Vorrichtung bedient, wobei die drahtlose Vorrichtung in einem zweiten Netzwerk in einem Energiesparmodus ist und das Verfahren Folgendes umfasst:
Empfangen (1752) einer ersten Anzeige eines periodischen Musters zum Durchführen eines Satzes von Prozeduren im Energiesparmodus im zweiten Netzwerk von der drahtlosen Vorrichtung;
Bestimmen (1754), dass die drahtlose Vorrichtung eine Mobilitätsprozedur zu einem zweiten Netzwerkknoten des ersten Netzwerks durchführen soll;
Senden (1756) einer zweiten Anzeige eines zweiten Musters zum Durchführen des Satzes von Prozeduren im Energiesparmodus im zweiten Netzwerk an den zweiten Netzwerkknoten;
Empfangen (1758) einer dritten Anzeige eines dritten Musters zum Durchführen des Satzes von Prozeduren im Energiesparmodus im zweiten Netzwerk vom zweiten Netzwerkknoten; und
Senden (1760) der dritten Anzeige an die drahtlose Vorrichtung;
wobei das Senden der zweiten Anzeige an den zweiten Netzwerkknoten Senden einer Mobilitätsbefehlsanforderung umfasst und das Empfangen der dritten Anzeige vom zweiten Netzwerkknoten Empfangen einer Mobilitätsbefehlsbestätigung umfasst und das Senden der dritten Anzeige an die drahtlose Vorrichtung Senden eines Mobilitätsbefehls umfasst; und
wobei die dritte Anzeige eine Messlückenkonfiguration umfasst, wobei eine oder mehrere der ersten Anzeige und der zweiten Anzeige eine Messlückenkonfiguration umfassen und wobei das zweite Muster und das dritte Muster auf dem ersten Muster und einer Zeitdomänenfunkeigenschaft des zweiten Netzwerkknotens basieren.

9. Verfahren nach Anspruch 8, wobei das Senden der zweiten Anzeige an den zweiten Netzwerkknoten Senden einer Messkonfiguration umfasst, das Empfangen der dritten Anzeige vom zweiten Netzwerkknoten Empfangen einer Messkonfiguration umfasst und das Senden der dritten Anzeige an die drahtlose Vorrichtung Senden einer Messkonfiguration umfasst.

10. Verfahren nach Anspruch 8 oder 9, wobei die erste Anzeige als Teil des Access-Stratum-Kontexts der drahtlosen Vorrichtung gespeichert wird.

11. Netzwerkknoten (160), der dazu konfiguriert, in einem ersten Netzwerk zu operieren, das eine drahtlose Vorrichtung bedient, wobei der Netzwerkknoten Verarbeitungsschaltungsanordnung (170) umfasst, die zum Durchführen des Verfahrens nach einem der Ansprüche 8-10 ausgelegt ist.

## Revendications

1. Procédé réalisé par un dispositif sans fil fonctionnant dans un premier réseau et un deuxième réseau, dans lequel le dispositif sans fil se trouve dans un mode d'économie d'énergie dans le deuxième réseau, le procédé comprenant :
la détermination (1732) d'un premier motif de réalisation d'un ensemble de procédures de mode d'économie d'énergie dans le deuxième réseau ;
la transmission (1734) d'une première indication du motif déterminé à un premier nœud de réseau du premier réseau ;
la réception (1736), depuis le premier nœud de réseau, d'une commande de mobilité pour réaliser une procédure de mobilité du premier nœud de réseau à un deuxième nœud de réseau du premier réseau, la commande de procédure de mobilité incluant une configuration d'intervalle de mesure pour réaliser l'ensemble de procédures de mode d'économie d'énergie dans le deuxième réseau ;
la réalisation (1738) de la procédure de mobilité au deuxième nœud de réseau ; et
la surveillance (1740) du deuxième réseau selon la configuration d'intervalle de mesure,
dans lequel la configuration d'intervalle de mesure est basée sur le premier motif et une propriété radio de domaine temporel du deuxième nœud de réseau, et
dans lequel le mode d'économie d'énergie correspond à un état de veille ou inactif du dispositif sans fil.

2. Procédé selon la revendication 1, dans lequel la première indication est transmise au premier nœud de réseau via un rapport de mesure.

3. Procédé selon l'une quelconque des revendications 1 et 2, dans lequel la première indication est transmise au premier nœud de réseau sur la base d'une indication dans une configuration de mesure.

4. Procédé selon l'une quelconque des revendications 1 à 3, dans lequel le premier motif est basé sur une ou plusieurs des procédures suivantes dans le deuxième réseau : trames de radiomessagerie et occasions de radiomessagerie configurées pour le dispositif sans fil, cycle de réception discontinue, DRX, périodes de réalisation de mesure, et mises à jour périodiques de zone d'enregistrement.

5. Procédé selon l'une quelconque des revendications 1 à 4, dans lequel la commande de mobilité comprend une commande de transfert intercellulaire ; et facultativement
dans lequel la procédure de mobilité comprend une procédure de transfert intercellulaire du premier nœud de réseau au deuxième nœud de réseau.

6. Procédé selon l'une quelconque des revendications 1 à 5, dans lequel le dispositif sans fil comprend un dispositif sans fil multi-SIM.

7. Dispositif sans fil (110) configuré pour fonctionner dans un premier réseau et un deuxième réseau, dans lequel le dispositif sans fil est en outre configuré pour fonctionner dans un mode d'économie d'énergie dans le deuxième réseau, le dispositif sans fil comprenant une circuiterie de traitement (120) exploitable pour réaliser le procédé selon l'une quelconque des revendications 1 à 6.

8. Procédé réalisé par un premier nœud de réseau dans un premier réseau desservant un premier dispositif sans fil, dans lequel le dispositif sans fil se trouve dans un mode d'économie d'énergie dans un deuxième réseau, le procédé comprenant :
la réception (1752), depuis le dispositif sans fil, d'une première indication d'un premier motif de réalisation d'un ensemble de procédures de mode d'économie d'énergie dans le deuxième réseau ;
la détermination (1754) que le dispositif sans fil doit réaliser une procédure de mobilité à un deuxième nœud de réseau du premier réseau ;
la transmission (1756), au deuxième nœud de réseau, d'une deuxième indication d'un deuxième motif de réalisation de l'ensemble de procédures de mode d'économie d'énergie dans le deuxième réseau ;
la réception (1758), depuis le deuxième nœud de réseau, d'une troisième indication d'un troisième motif de réalisation de l'ensemble de procédures de mode d'économie d'énergie dans le deuxième réseau ; et
la transmission (1760) de la troisième indication au dispositif sans fil ;
dans lequel la transmission de la deuxième indication au deuxième nœud de réseau comprend la transmission d'une demande de commande de mobilité, et la réception de la troisième indication depuis le deuxième nœud de réseau comprend la réception d'un accusé de réception de commande de mobilité, et la transmission de la troisième indication au dispositif sans fil comprend la transmission d'une commande de mobilité ; et
dans lequel la troisième indication comprend une configuration d'intervalle de mesure, dans lequel une ou plusieurs parmi la première indication et la deuxième indication comprennent une configuration d'intervalle de mesure, et dans lequel le deuxième motif et le troisième motif sont basés sur le premier motif et une propriété radio de domaine temporel du deuxième nœud de réseau.

9. Procédé selon la revendication 8, dans lequel la transmission de la deuxième indication au deuxième nœud de réseau comprend la transmission d'une configuration de mesure, la réception de la troisième indication depuis le deuxième nœud de réseau comprend la réception d'une configuration de mesure, et la transmission de la troisième indication au dispositif sans fil comprend la transmission d'une configuration de mesure.

10. Procédé selon la revendication 8 ou 9, dans lequel la première indication est stockée dans le cadre du contexte de strate d'accès de dispositif sans fil.

11. Nœud de réseau (160) configuré pour fonctionner dans un premier réseau desservant un premier dispositif sans fil, le nœud de réseau comprenant une circuiterie de traitement (170) exploitable pour réaliser le procédé selon l'une quelconque des revendications 8 à 10.
